(19)

Europäisches
Patentamt
European
Patent Office
Office européen
des brevets

(11) **EP 2 849 455 A1**

(12) **EUROPEAN PATENT APPLICATION**

(43) Date of publication:
**18.03.2015 Bulletin 2015/12**

(21) Application number: **14183078.6**

(22) Date of filing: **01.09.2014**

(51) Int Cl.:
**H04N 21/475** *(2011.01)*    **H04N 21/4788** *(2011.01)*
**H04N 21/6587** *(2011.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.09.2013 JP 2013190689**

(71) Applicant: **Ricoh Company, Ltd.**
**Tokyo 143-8555 (JP)**

(72) Inventors:
- **Kuba, Yasuhiro**
  **Tokyo, 143-8555 (JP)**
- **Kasatani, Kiyoshi**
  **Tokyo, 143-8555 (JP)**

(74) Representative: **Maury, Richard Philip**
**Marks & Clerk LLP**
**90 Long Acre**
**London WC2E 9RA (GB)**

(54) **Distribution management apparatus and distribution management system**

(57) A distribution management apparatus (2) includes a generating unit (20) configured to render content data to generate video data; a converter configured to convert a data format of the video data into a data format allowing the video data to be distributed to communication terminals (5) including a first communication terminal and a second communication terminal; a transmitter/receiver (31) configured to distribute the converted video data to the communication terminals (5); a receiver (31) configured to receive path information indicating an operation path drawn by the first communication terminal and a drawing timing of the operation path from the first communication terminal; an acquiring unit (201) configured to acquire identification information that identifies content data corresponding to video data reproduced by the second communication terminal at the drawing timing; and a storage unit (23) configured to store therein the path information and the identification information in association with each other.

FIG.7

EP 2 849 455 A1

**Description**

FIELD OF THE INVENTION

The present invention relates to a distribution management apparatus and a distribution management system.

BACKGROUND OF THE INVENTION

A system is known that, when a specific position or part in content being reproduced is designated, can provide information related to the content (refer to Japanese Laid-open Patent Publication No. 2009-65551, for example). In Japanese Laid-open Patent Publication No. 2009-65551, content and related information corresponding to any element in the content are registered in advance in a database in a server. When receiving the content and designation information for a specific element within the content from a terminal that is supplied with the content, the server transmits the corresponding information to the terminal.

However, it has been conventionally required to register elements included in content to be distributed and related information in association with each other in advance. Because of this, in the case where a communication terminal serving as a projector, for example, reproduces video and another communication terminal draws operation paths such as characters in a memorandum, lines, and images, conventionally, the operation paths and the video being reproduced cannot be associated with each other. In other words, it has been conventionally difficult to dynamically associate operation paths such as lines and images drawn by a user with one communication terminal and information on video being reproduced by another communication terminal with each other.

Therefore, there is a need to provide a distribution management apparatus and a distribution management system that can dynamically associate an operation path drawn by one communication terminal with information on video being reproduced by another communication terminal.

SUMMARY OF THE INVENTION

It is an object of the present invention to at least partially solve the problems in the conventional technology.

According to an embodiment, there is provided a distribution management apparatus that includes a generating unit configured to render content data to generate video data; a converter configured to convert a data format of the video data into a data format allowing the video data to be distributed to communication terminals including a first communication terminal and a second communication terminal; a transmitter/receiver configured to distribute the converted video data to the communication terminals; a receiver configured to receive path information indicating an operation path drawn by the first communication terminal and a drawing timing of the operation path from the first communication terminal; an acquiring unit configured to acquire identification information that identifies content data corresponding to video data reproduced by the second communication terminal at the drawing timing; and a storage unit configured to store therein the path information and the identification information in association with each other.

According to another embodiment, there is provided a distribution management system that includes a distribution management apparatus and communication terminals including a first communication terminal and a second communication terminal connected to the distribution management apparatus through a network. The distribution management apparatus includes a generating unit configured to render content data to generate video data; a converter configured to convert a data format of the video data into a data format allowing the video data to be distributed to the communication terminals including the first communication terminal and the second communication terminal; a transmitter/receiver configured to distribute the converted video data to the communication terminals; a receiver configured to receive path information indicating an operation path drawn by the first communication terminal and a drawing timing of the operation path from the first communication terminal; an acquiring unit configured to acquire identification information that identifies content data corresponding to video data reproduced by the second communication terminal at the drawing timing; and a storage unit configured to store therein the path information and the identification information in association with each other.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

FIG. 1 is a schematic diagram of a distribution system according to an embodiment;

FIG. 2 is a conceptual view when a dongle is attached to a communication terminal;

FIG. 3 is a conceptual diagram illustrating a basic distribution method;

FIG. 4 is a conceptual diagram of multicast;

FIG. 5 is a conceptual diagram of multidisplay;

FIG. 6 is a conceptual diagram of composite distribution;

FIG. 7 is a diagram illustrating an example of hardware configuration of a distribution management apparatus;

FIG. 8 is a functional block diagram illustrating functions of the distribution management apparatus;

FIG. 9 is a conceptual diagram of a drawing table;

FIG. 10 is a functional block diagram illustrating mainly the functions of the communication terminal;

FIG. 11 is a functional block diagram illustrating the functions of the terminal management apparatus;

FIG. 12 is a conceptual view of a distribution destination selection menu screen;

FIG. 13 is a conceptual view of a terminal management table;

FIG. 14 is a conceptual view of an available terminal management table;

FIG. 15 is a detailed diagram of an encoder bridge unit;

FIG. 16 is a functional block diagram illustrating the functions of a convertor;

FIG. 17 is a sequence diagram illustrating the basic distribution processing of the distribution management apparatus;

FIG. 18 is a sequence diagram illustrating the processing of time adjustment performed between the distribution management apparatus and a communication terminal;

FIG. 19 is a sequence diagram illustrating the processing of channel adaptive control on data transmitted from the distribution management apparatus to the communication terminal;

FIG. 20 is a sequence diagram illustrating the processing of channel adaptive control on data transmitted from the communication terminal to the distribution management apparatus;

FIG. 21 is a sequence diagram illustrating the processing of multidisplay;

FIG. 22 is a sequence diagram illustrating the processing of multidisplay;

FIG. 23 is a sequence diagram illustrating the processing of multidisplay;

FIG. 24 is a sequence diagram illustrating remote sharing processing with the distribution management apparatus; and

FIG. 25 is a flowchart illustrating drawing processing.

## DETAILED DESCRIPTION OF THE PREFERRED EMBODIMENTS

Described below with reference to the accompanying drawings is a distribution system according to an embodiment. The following embodiment is an application example of a distribution system that converts web content into video data, sound data, or video and sound data, and distributes the data to communication terminals such as personal computers and electronic blackboards using cloud computing. In the following, when indicating at least either one of video and sound, it will be represented as "video (sound)".

Outline of system configuration

Described first is an outline of the configuration of the distribution system 1.

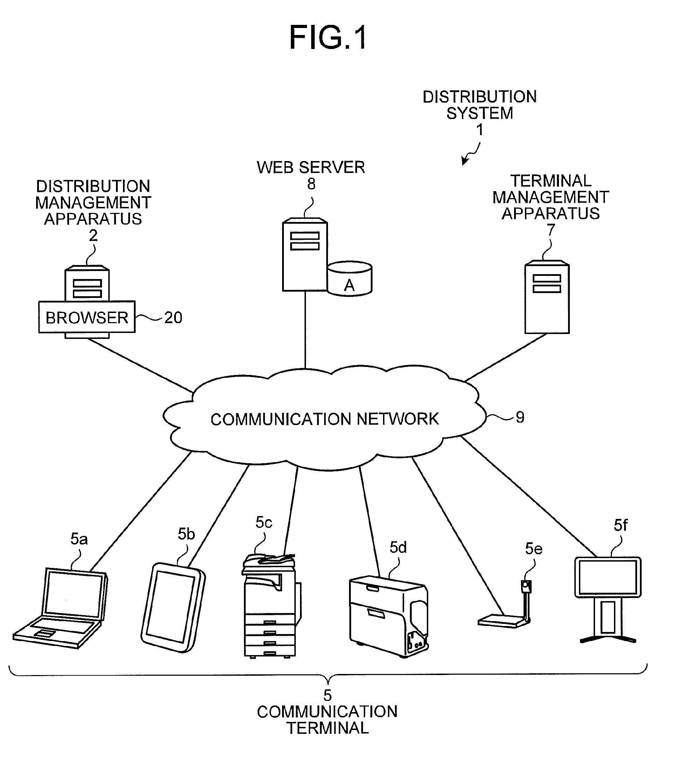

FIG. 1 is a schematic diagram of a distribution system 1 according to the present embodiment. As illustrated in FIG. 1, the distribution system 1 according to the present embodiment is constructed by a distribution management apparatus 2, a plurality of communication terminals 5a to 5f, a terminal management apparatus 7, and a web server 8. In the following, any communication terminal among the communication terminals 5a to 5f is represented as a "communication terminal 5". The distribution management apparatus 2, the terminal management apparatus 7, and the web server 8 are all constructed by server computers.

The communication terminal 5 is a terminal used by a user who receives services of the distribution system 1. The communication terminal 5a is a notebook personal computer (PC). The communication terminal 5b is a mobile terminal such as a smartphone and a tablet terminal. The communication terminal 5c is a multifunction peripheral/printer/product (MFP) in which the functions of copying, scanning, printing, and faxing are combined. The communication terminal 5d is a projector. The communication terminal 5e is a TV (video) conference terminal having a camera, a microphone, and a speaker. The communication terminal 5f is an electronic blackboard (whiteboard) that can receive operation paths drawn by the user and electronically convert the operation paths.

The communication terminal 5 may be not only the terminals illustrated in FIG. 1, but also a watch, an automatic vendor, a gas meter, a car navigation device, a game machine, an air conditioner, a lighting fixture, a camera unit, a microphone unit, and a speaker unit.

The distribution management apparatus 2, the communication terminal 5, the terminal management apparatus 7, and the web server 8 can communicate with each other through a communication network 9 such as the Internet and a local area network (LAN). The communication network 9 includes wireless communication networks such as 3rd Generation (3G), Worldwide Interoperability for Microwave Access (WiMAX), and Long-Term Evolution (LTE).

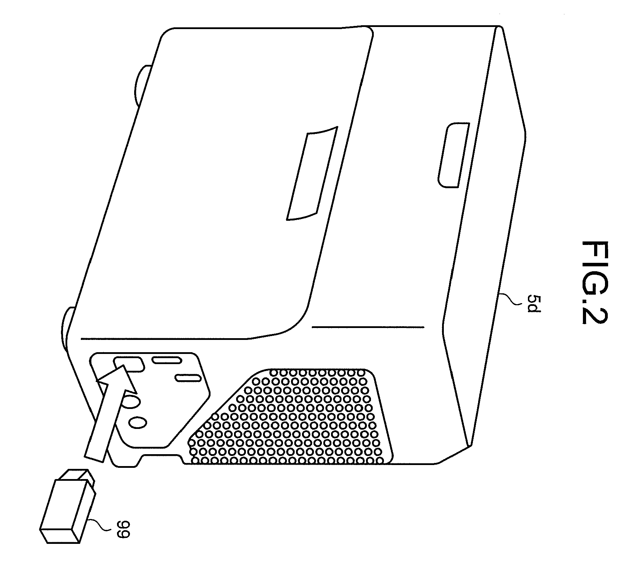

The communication terminal 5, like the communication terminal 5d, may not have a function of communicating with the other terminals and systems through the communication network 9. However, as illustrated in FIG. 2, a user inserts a dongle 99 into an interface of Universal Serial Bus (USB) or High-Definition Multimedia Interface (HDMI) (registered trademark) of the communication terminal 5d, thereby allowing it to communicate with the other terminals and systems. FIG. 2 is a conceptual view when the dongle 99 is attached to the communication terminal.

The distribution management apparatus 2 includes what is called a cloud browser (hereinafter, referred to as a "browser 20") as a web browser present on a cloud. The distribution management apparatus 2 renders web content on the cloud with the browser 20 to produce video (sound) data conforming to H.264 or MPEG-4, and distributes it to the communication terminal 5.

The distribution management apparatus 7 has a function as a management server and performs, for example, login authentication on the communication terminal 5 and management of the contract information of the communication terminal 5. The terminal management apparatus 7 has a function of a Simple Mail Transfer Protocol (SMTP) server for transmitting e-mails. The terminal management apparatus 7 can be embodied as, for example, an imaginary machine developed on a cloud service (IaaS: Infrastructure as a Service). It is desirable that the terminal management apparatus 7 be operated in a multiplexed manner in order to address unexpected incidents to perform continuous service provision.

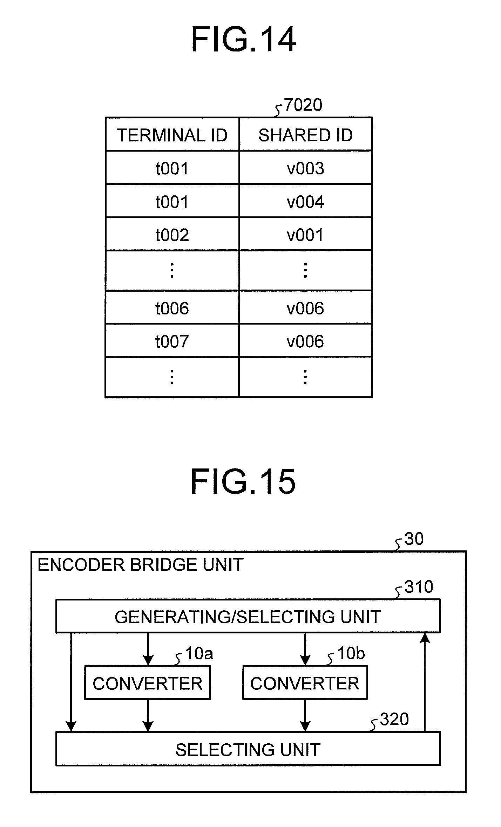

The browser 20 of the distribution management apparatus 2 enables real-time communication/collaboration (RTC). In addition, an encoder bridge unit 30 of the distribution management apparatus 2 described below includes an encoding unit 19 (refer to FIG. 15 described later). Although the details will be described later, the encoding unit 19 can real-time encode the video (sound) data generated by the browser 20. As a result, the processing of the distribution management apparatus 2 is different from, for example, a case in which non real-time video (sound) data recorded in a DVD is read and distributed by a DVD player.

Outline of various kinds of distribution methods

Described next is an outline of various kinds of distribution methods.

Basic distribution

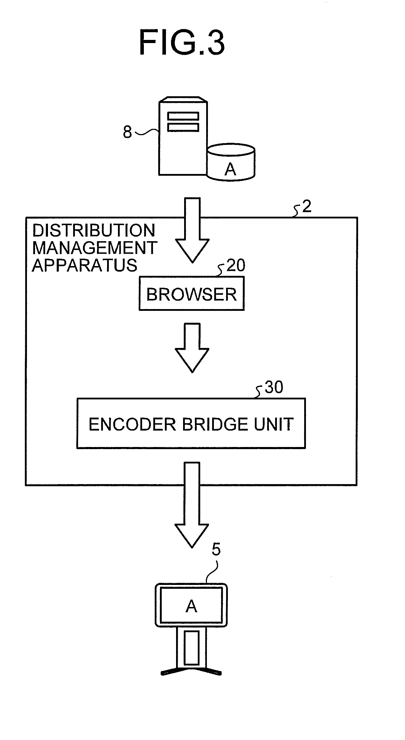

FIG. 3 is a conceptual diagram illustrating a basic distribution method of the distribution system 1 according to the present embodiment. In the distribution system 1, as illustrated in FIG. 3, the browser 20 of the distribution management apparatus 2 acquires web content data [A] from the web server 8 and renders it, thereby generating pieces of video (sound) data [A]. The encoder bridge unit 30 encodes the video (sound) data [A] and transmits it to the communication terminal 5. Hence, even when generated web content in accordance with Hyper Text Markup Language (HTML), Cascading Style Sheets (CSS), or the like is rich, the web content is distributed as the video (sound) data conforming to H.264 or MPEG-4, thereby enabling even a low specification communication terminal 5 to smoothly reproduce video (sound). The distribution system 1 according to the present embodiment updates the browser 20 of the distribution management apparatus 2, thereby enabling the latest rich web content to be reproduced on the communication terminal 5 without updating a local browser thereof.

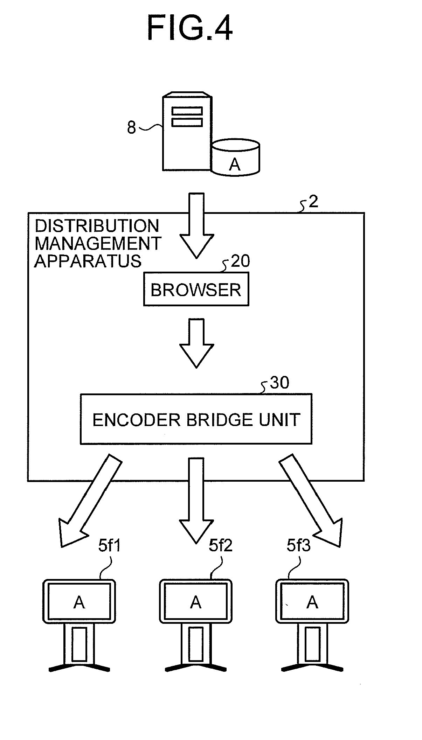

As illustrated in FIG. 4 to FIG. 6, the distribution system 1 can also distribute web content as video (sound) data to a plurality of communication terminals 5 in the same site or in a plurality of sites by adapting the above distribution method. The following describes the distribution method illustrated in FIG. 4 to FIG. 6.

Multicast

FIG. 4 is a conceptual diagram of multicast. As illustrated in FIG. 4, the single browser 20 of the distribution management apparatus 2 acquires the web content data [A] from the web server 8 and renders it, thereby generating pieces of video (sound) data [A]. The encoder bridge unit 30 encodes the pieces of video (sound) data [A]. The distribution management apparatus 2 then distributes the video (sound) data [A] to a plurality of communication terminals 5f1, 5f2, 5f3. Hence, for example, the communication terminals 5f1, 5f2, 5f3 in the plurality of sites can output the same video (sound). In this case, the communication terminals 5f1, 5f2, 5f3 do not need to have the same display reproduction capability (e.g., the same resolution). The distribution method like this is called, for example, "multicast".

Multidisplay

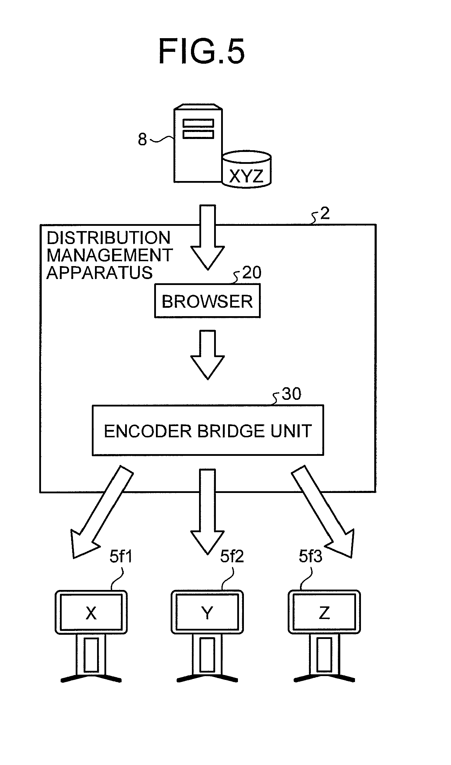

FIG. 5 is a conceptual diagram of multidisplay. As illustrated in FIG. 5, the single browser 20 of the distribution management apparatus 2 acquires web content data [XYZ] from the web server 8 and renders it, thereby generating one piece of video (sound) data [XYZ]. The encoder bridge unit 30 divides one piece of video (sound) data [XYZ] into a plurality of pieces of video (sound) data [X], [Y], [Z] and then encodes them. Subsequently, the distribution management apparatus 2 distributes the divided video (sound) data [X] to the communication terminal 5f1. Similarly, the distribution management apparatus 2 distributes the divided video (sound) data [Y] to the communication terminal 5f2 and distributes the divided video (sound) data [Z] to the communication terminal 5f3. Thus, for example, even for landscape web content data [XYZ], video is displayed by the communication terminals 5f1, 5f2, 5f3 in a divided manner. As a result, when the communication terminals 5f1, 5f2, 5f3 are installed in a line, the same effect as the display of one piece of large video can be obtained. In this case, the communication terminals 5f1, 5f2, 5f3 need to have the same display reproduction capability (e.g., the same resolution). The distribution method like this is called, for example, "multidisplay".

Composite distribution

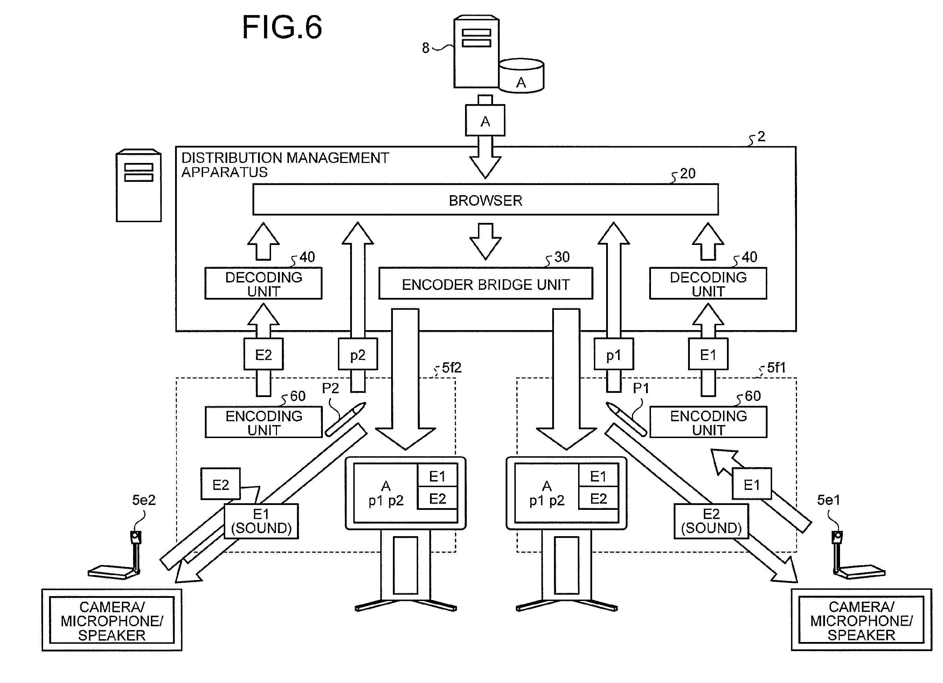

FIG. 6 is a conceptual diagram of composite distribution using a plurality of communication terminals 5 through a distribution management apparatus 2. FIG. 6 is also a conceptual diagram of remote sharing processing. As illustrated in FIG. 6, at a first site (the right side in FIG. 6), the communication terminal 5f1 as an electronic blackboard and a communication terminal 5e1 as a TV conference terminal are used, and at a second site (the left side in FIG. 6), the communication terminal 5f2 as an electronic blackboard and a communication terminal 5e2 as a TV conference terminal are used similarly. At the first site, an electronic pen P1 is used for displaying operation information such as characters with operation paths on the communication terminal 5f1. At the second site, an electronic pen P2 is used for displaying operation information such as characters with operation paths on the communication terminal 5f2. In the example illustrated in FIG. 6, at the first site, the communication terminal 5e1 as the TV conference terminal is connected to the communication terminal 5f1 as the electronic blackboard, and a camera/microphone/speaker of the communication terminal 5e1 is used as an external camera/microphone/speaker of the communication terminal 5f1. Similarly, at the second site, the communication terminal 5e2 as the TV conference terminal is connected to the communication terminal 5f2 as the electronic blackboard, and a camera/microphone/speaker of the communication terminal 5e2 is used as an external camera/microphone/speaker of the communication terminal 5f2.

At the first site, video (sound) data [E1] acquired by the communication terminal 5e1 is encoded by an encoding unit 60 and is then transmitted to the distribution management apparatus 2. After that, it is decoded by a decoding unit 40 of the distribution management apparatus 2 and is then input to the browser 20. Operation information [p1] indicating the operation paths drawn by the communication terminal 5f1 with the electronic pen P1 or the like is transmitted to the distribution management apparatus 2 to be input to the browser 20. Also at the second site, video (sound) data [E2] acquired by the communication terminal 5e2 is encoded by the encoding unit 60 and is then transmitted to the distribution management apparatus 2. After that, it is decoded by the decoding unit 40 of the distribution management apparatus 2 and is then input to the browser 20. Operation information [p2] such as the operation paths drawn by the communication terminal 5f2 with the electronic pen P2 is transmitted to the distribution management apparatus 2 to be input to the browser 20.

The browser 20, for example, acquires web content data [A] representing a background image to be displayed on the respective displays of the communication terminals 5f1, 5f2 from the web server 8. The browser 20 combines and renders the web content data [A], the operation information [p1], [p2], and the video (sound) data [E1], [E2], thereby generating video (sound) data installed with a desired layout. The encoder bridge unit 30 encodes the video (sound) data, and the distribution management apparatus 2 distributes the same video (sound) data to the respective sites. At the first site, thereby, video ([A], [p1], [p2], [E1 (video part)] and [E2] (video part) are displayed on the display of the communication terminal 5f1, and a sound [E2 (sound part)] is output from the speaker of the communication terminal 5e1. Also at the second site, video ([A], [p1], [p2], [E1 (video part)] and [E2] (video part) are displayed on the display of the communication terminal 5f2, and a sound [E1 (sound part)] is output from the speaker of the communication terminal 5e2. At the first site, the sound of the site itself [E1 (sound part)] is not output owing to an echo cancelling function of the communication terminal 5f1. At the second site, the sound of the site itself [E2 (sound part)] is not output owing to an echo cancelling function of the communication terminal 5f2.

Thus, at the first site and the second site, remote shared processing can be performed that shares the same information in real time at remote sites, thus making the distribution system 1 according to the present embodiment effective in a teleconference or the like.

Detailed description of the embodiment

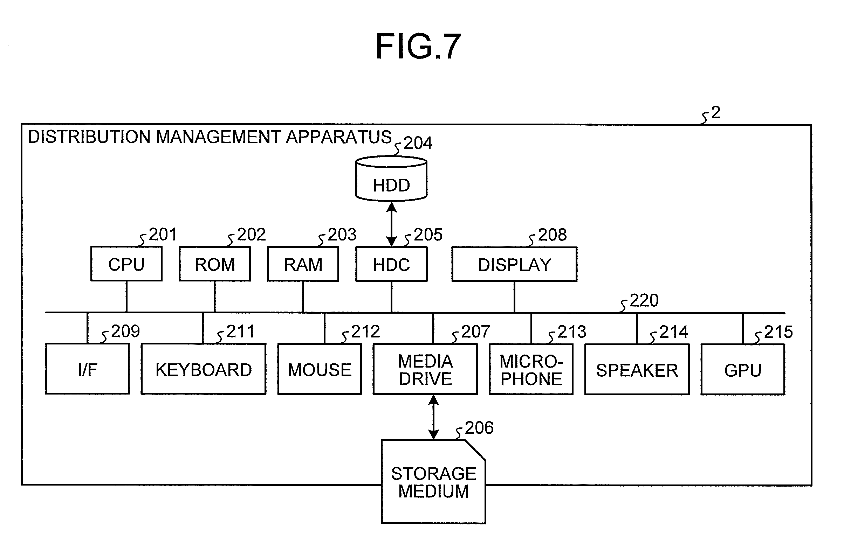

Described next with reference to FIG. 7 to FIG. 25 is detailed description of the embodiment.

5

Hardware configuration of the embodiment

Described first with reference to FIG. 7 is the hardware configuration of the present embodiment. FIG. 7 is a diagram illustrating an example of the hardware configuration of the distribution management apparatus 2. Because the hardware configuration of the communication terminal 5, the terminal management apparatus 7, and the web server 8 is the same as the hardware configuration of the distribution management system 2 illustrated in FIG. 7, the description thereof will be omitted.

As illustrated in FIG. 7, the distribution management apparatus 2 includes: a CPU 201 that controls the entire operation of the distribution management system 2; a ROM 202 such as an initial program loader (IPL) that stores therein a program used for driving the CPU 201; a RAM 203 used as a work area of the CPU 201; an HDD 204 that stores therein various kinds of data such as programs; a hard disk controller (HDC) 205 that controls the reading and writing the various kinds of data from and into the HDD 204 under the control of the CPU 201; a media drive 207 that controls the reading and writing data from and into a storage medium 206 such as a flash memory; a display 208 that displays various kinds of information; an I/F 209 for transmitting data through the communication network 9 and connecting the dongle 99; a keyboard 211; a mouse 212; a microphone 213, a speaker 214, a graphics processing unit (GPU) 215; and a bus line 220 such as an address bus and a data bus for electrically connecting the above components.

The programs for the respective communication terminals, the respective systems, and the respective servers may be stored in computer-readable media such as the storage medium 206 and distributed as installable or executable files.

Functional configuration of the embodiment

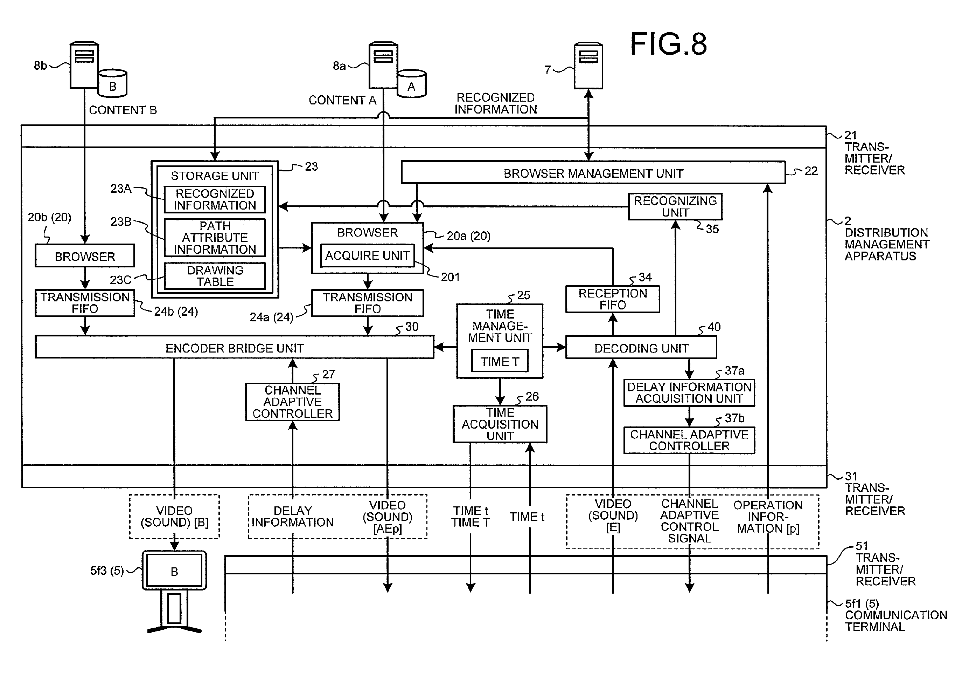

Described next with reference to FIG. 8 to FIG. 16 is the functional configuration of the embodiment. FIG. 8 is a functional block diagram illustrating the functions of the distribution management apparatus 2. FIG. 8 illustrates a functional configuration when the distribution management apparatus 2 distributes video (sound) data to the communication terminal 5f1 (corresponding to the first communication terminal) and the communication terminal 5f3 (corresponding to the second communication terminal). However, the functional configuration is similar for the distribution destination is other than the communication terminal 5f1 or the communication terminal 5f3. Although the distribution management apparatus 2 includes a plurality of distribution engine servers, described below is a case when a 1 distribution engine server is included in order to simplify the description.

Functional Configuration of Distribution Management Apparatus

The distribution management apparatus 2 achieves the functional components illustrated in FIG. 8 by the hardware configuration and the program exemplified in FIG. 7. Specifically, the distribution management apparatus 2 includes the browser 20, a transmitter/receiver 21, a browser management unit 22, a transmission first-in first-out (FIFO) 24, a time management unit 25, a time acquisition unit 26, a channel adaptive controller 27, the encoder bridge unit 30, a transmitter/receiver 31, a reception FIFO 34, a recognizing unit 35, a delay information acquisition unit 37a, a channel adaptive controller 37b, and the decoding unit 40.

The distribution management apparatus 2 further includes a storage unit 23 constructed by the HDD 204 illustrated in FIG. 7. This storage unit 23 stores therein recognition information 23A described below output from the recognizing unit 35. The content data acquired by the browser 20 can be temporarily stored in the storage unit 23 as a cache. The storage unit 23 stores therein path attribute information 23B and a drawing table 23C (which will be detailed below).

Among the above functional components, the browser 20 is a browser that operates within the distribution management apparatus 2. The browser 20 renders content data such as web content data, thereby generating video (sound) data as RGB data (or pulse code modulation (PCM) data). The browser 20 is updated corresponding to the enrichment of web content at all times.

The distribution system 1 according to the present embodiment provides the browsers 20 within the distribution management apparatus 2, and a cloud browser for use in a user session is selected from the browsers 20.

The present embodiment describes a case when the distribution management apparatus 2 includes the browser 20a and the browser 20b as the browser 20. The browser 20a is a browser 20 corresponding to the communication terminal 5f1. The browser 20b is a browser 20 corresponding to the communication terminal 5f3. When these browsers 20a and the browser 20b are collectively referred to, they are referred to as the browser 20.

The browser 20 includes, for example, Media Player, Flash Player, JavaScript (registered trademark), CSS, and HTML Renderers. JavaScript (registered trademark) includes the standardized product and one unique to the distribution system 1. Media Player is a browser plug-in for reproducing multimedia files such as video (sound) files within the browser 20. Flash Player is a browser plug-in for reproducing flash content within the browser 20. The unique JavaScript (registered trademark) is a JavaScript set that provides the application programming interface (API) of services unique to the distribution system 1. CSS is a technique for efficiently defining the appearance and style of web pages described in HTML. HTML Renderer is an HTML rendering engine.

The transmitter/receiver 21 transmits and receives various kinds of data, various kinds of requests, various kinds of instructions, and the like to and from the terminal management apparatus 7 and the web server 8. For example, the transmitter/receiver 21 acquires web content data from a content site of the web server 8.

The browser management unit 22 manages the browser 20 and the encoder bridge unit 30. For example, the browser management unit 22 instructs the browser 20 and the encoder bridge unit 30 to start up and exit and numbers an encoder ID at startup or exit. The encoder ID is identification information the browser management unit 22 numbers in order to manage the process of the encoder bridge unit 30. The browser management unit 22 numbers and manages a browser ID every time the browser 20 is started up. The browser ID is identification information the browser management unit 22 numbers in order to manage the process of the browser 20 to identify the browser 20.

The browser management unit 22 acquires various kinds of operation information [p] from the communication terminal 5 through the transmitter/receiver 31 and outputs them to the browser 20a. The browser 20a includes an acquiring unit 201. The acquiring unit 201 acquires the operation information [p] from the communication terminal 5f1 through the browser management unit 22 and the transmitter/receiver 31.

The operation information [p] is operation events (instruction information through the keyboard 211, the mouse 212, or other devices, and operation paths through the electronic pen P, the mouse 212, or other devices) on the communication terminal 5.

In the present embodiment, the operation information [p] includes a terminal ID indicating the communication terminal 5 as a transmission source, path information, drawing timing, and instruction information.

The path information is information indicating operation paths such as characters, lines, and images drawn by the operation of the electronic pen P or the like by the user on the communication terminal 5. The path information includes a set of position coordinates on a page (display screen) indicating paths and path attribute information.

The path attribute information indicates display forms of operation paths such as the line type (a dotted line, a dashed line, or the like) of an operation path, the thickness of the path, and the color of the path.

The drawing timing indicates timing when an operation path has been drawn by the user. The drawing timing is represented by, but not limited to, a time, an elapsed time from the start of reproduction in video being reproduced, a reproduction position (such as a frame), or other indexes.

The instruction information is information indicating processing contents instructed by the user who operates the communication terminal 5. In the present embodiment, the instruction information includes a drawing processing instruction indicating drawing processing, a drawing mode indicating new drawing, an erasing mode indicating the erasing of drawn drawing, or a menu processing instruction.

When the instruction information includes the erasing mode, the operation information [p] includes the position information of the operation path of an object to be erased on the screen in place of the path information and the drawing timing.

The browser 20a performs the drawing processing described below based on the operation information acquired by the acquiring unit 201. This drawing processing updates the drawing table 23C in the storage unit 23. The drawing processing will be described in detail below.

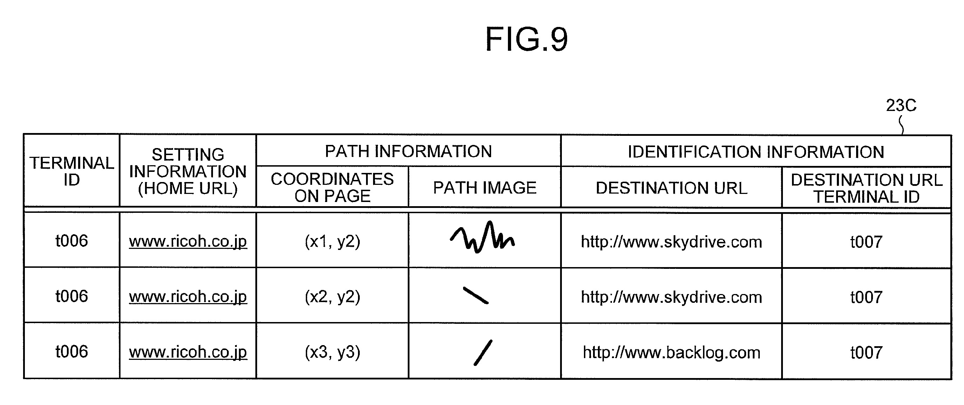

FIG. 9 is a conceptual diagram of the drawing table 23C. The drawing table 23C is a table that associates a terminal ID, setting information indicating a home uniform resource locator (URL), path information, and identification information.

The terminal ID is identification information uniquely identifying the communication terminals 5. The setting information indicates the home URL of the communication terminal 5 identified by the corresponding terminal ID. The setting information is an URL indicating an access destination to the browser 20 corresponding to each communication terminal 5.

In the present embodiment, the drawing table 23C stores therein coordinates on a page and path images generated from the path information included in the operation information [p] acquired from the communication terminal 5. The path image is a command indicating a drawing instruction of an image indicating an operation path generated by the browser 20a from the path information included in the operation information [p]. When the path attribute information included in the path information indicates that the operation path is a thick, red wavy line, for example, a drawing instruction of an image that indicates this thick, red wavy line and continues a set of position coordinates indicating the path is the path image. The coordinates on a page stored in the drawing table 23C indicate the drawing starting position of the operation path.

The identification information is information for identifying content data corresponding to video data that is reproduced by another communication terminal 5 (the communication terminal 5f3, for example) as an object of remote sharing processing at the drawing timing included in the operation information [p] received from one communication terminal (the communication terminal 5f1, for example). In the present embodiment, the identification information includes a destination URL and a destination URL terminal ID. The destination URL indicates the setting information (home URL) of the communication terminal 5 as the object of remote sharing processing to which video (sound) data based on the content data is being distributed. The destination URL terminal ID is the terminal ID of the communication terminal 5.

Returning back to FIG. 8, when the communication terminal 5 provides various sensors such as a temperature sensor, a humidity sensor, or an acceleration sensor, the browser management unit 22 acquires sensor information that is an output signal of the sensors from the communication terminal 5 and outputs it to the browser 20.

The transmission FIFO 24 is a buffer that stores therein the pieces of video (sound) data generated by the browser 20. In the present embodiment, the distribution management apparatus 2 includes a transmission FIFO 24a and a transmission FIFO 24b. The transmission FIFO 24a is a buffer that stores therein video (sound) data generated by the browser 20a. The transmission FIFO 24b is a buffer that stores therein video (sound) data generated by the browser 20b.

The time management unit 25 manages time T unique to the distribution management apparatus 2. The time acquisition unit 26 performs time adjustment processing in conjunction with a time controller 56 in the communication terminal 5 described below. Specifically, the time acquisition unit 26 acquires time information (T) indicating time T in the distribution management apparatus 2 from the time management unit 25, receives time information (t) indicating time t in the communication terminal 5 from the time controller 56 described below through the transmitter/receiver 31 and a transmitter/receiver 51, and transmits the time information (t) and the time information (T) to the time controller 56.

The channel adaptive controller 27 calculates reproduction delay time U based on transmission delay time information (D) described below and calculates operation conditions such as the frame rate and the data resolution of a convertor 10 in the encoder bridge unit 30. This reproduction delay time U is time for delaying reproduction through the buffering of data until being reproduced.

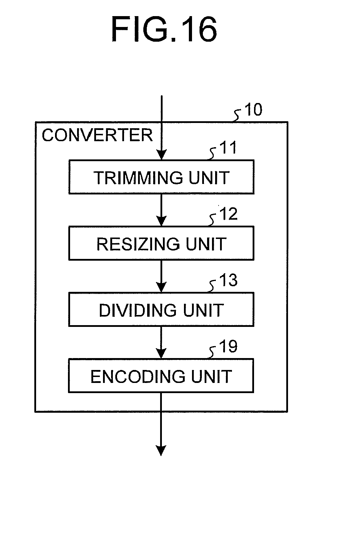

The encoder bridge unit 30 performs processing such as data format conversion on the video (sound) data generated by the browser 20 and stored in the transmission FIFO 24. The encoder bridge unit 30 distributes the video (sound) data the data format of which has been converted to the communication terminals (the communication terminal 5f1 and the communication terminal 5f3) as objects of distribution. The encoder bridge unit 30 will be described in more detail with reference to FIG. 15 and FIG. 16. FIG. 15 is a detailed diagram of the encoder bridge unit 30. FIG. 16 is a functional block diagram illustrating the functions of the convertor 10.

As illustrated in FIG. 15, the encoder bridge unit 30 includes a generating/selecting unit 310, a selecting unit 320, and a plurality of converters 10a, 10b provided therebetween. Although the two converters 10a, 10b are illustrated here, any number of them may be provided. In the following, any convertor is represented as a "convertor 10".

Further, as illustrated in FIG. 16, the convertor 10 includes a trimming unit 11, a resizing unit 12, a dividing unit 13, and the encoding unit 19. The trimming unit 11, the resizing unit 12, and the dividing unit 13 do not perform any processing on sound data.

The trimming unit 11 performs processing to cut out only part of a video (image). The resizing unit 12 changes the reduced scale of a video (image). The dividing unit 13, as illustrated in FIG. 5, divides the web content acquired from the web server 8.

The encoding unit 19 in FIG. 16 described below encodes the pieces of video (sound) data generated by the browser 20, thereby converting them so that video (sound) data can be distributed to the communication terminal 5 through the communication network 9. When the video is not in motion (when there is no inter-frame update (change)), a skip frame (may be sometimes referred to as frame skip) is thereafter inserted until the video moves to save a band. When only sound data is generated, only encoding is performed.

The generating/selecting unit 310 generates a new convertor 10 and selects pieces of video (sound) data to be input to a convertor 10 that is already generated. Examples of the case when the generating/selecting unit 310 newly generates a converter 10 may include selecting the converter 10 that is already generated and generating a converter 10 capable of conversion responsive to the reproduction capability of video (sound) data in the communication terminal 5. Examples of the case when the generating/selecting unit 310 selects video (sound) data to be input to the converter 10 may include, in stating the distribution to the communication terminal 5f3 in addition to the distribution to the communication terminal 5f1, distributing the same video (sound) data as the video (sound) data being distributed to the communication terminal 5f1 to the communication terminal 5f3. In such a case, furthermore, when the communication terminal 5f3 has the same reproduction capability as the reproduction capability of video (sound) data of the communication terminal 5f1, the generating/selecting unit 310, without generating a new convertor 10b for the communication terminal 5f3, utilizes the convertor 10a that is already generated for the communication terminal 5f1.

The selecting unit 320 selects a desired one from the convertors 10 that are already generated. The selection by the generating/selecting unit 310 and the selecting unit 320 can perform distribution of various patterns as illustrated in FIG. 6.

Returning back to FIG. 8, the transmitter/receiver 31 transmits and receives various data, requests, and the like to and from the communication terminal 5. For example, in the login processing of the communication terminal 5, the transmitter/receiver 31 transmits, to the transmitter/receiver 51 described below of the communication terminal 5, authentication screen data for prompting a user a login request. The transmitter/receiver 31 also performs data transmission and data reception to and from application programs (user applications or device applications) installed in the communication terminal 5 in order to receive the services of the distribution system 1 in accordance with a protocol unique to the distribution system 1 through a Hypertext Transfer Protocol over Secure Socket Layer (HTTPS) server. This unique protocol is an HTTPS-based application layer protocol for transmitting and receiving data in real time and without being interrupted between the distribution management apparatus 2 and the communication terminal 5. The transmitter/receiver 31 also performs processing of transmission response control, real-time data generation, command transmission, reception response control, reception data analysis, and gesture conversion.

The transmission response control is processing to manage an HTTPS session for downloading requested from the communication terminal 5 in order to transmit data from the distribution management apparatus 2 to the communication terminal 5. The response of the HTTPS session for downloading does not end immediately and holds for a certain period of time (one to a few minutes). The transmitter/receiver 31 dynamically writes data to be sent to the communication terminal 5 in the Body part of the response. In order to eliminate costs for reconnection, another request is allowed to reach from the communication terminal 5 before the previous session ends. By putting the transmitter/receiver 31 on standby until the previous request is completed, overhead can be eliminated even when reconnection is performed.

The real-time data generation is processing to add a unique header to the data (RTP data) of compressed video (and a compressed sound) generated by the encoding unit 19 in FIG. 16 described later and write it in the Body part of a downstream HTTPS to the communication terminal 5.

Client command transmission is processing to generate command data to be transmitted to the communication terminal 5 and write it in the Body part of HTTPS for distribution (downstream) to the communication terminal 5.

The reception response control is processing to manage an HTTPS session requested from the communication terminal 5 in order for the distribution management apparatus 2 to receive data from the communication terminal 5. The response of this HTTPS session does not end immediately and is held for a certain period of time (one to a few minutes). The communication terminal 5 dynamically writes data to be sent to the transmitter/receiver 31 of the distribution management apparatus 2 in the Body part of the request.

The reception data analysis is processing to analyze the data transmitted from the communication terminal 5 by type and deliver the data to a necessary process.

The gesture conversion is processing to convert a gesture event input to the communication terminal 5f as the electronic blackboard by a user with an electronic pen P or in handwriting into a format capable of being received by the browser 20.

The reception FIFO 34 is a buffer that stores therein video (sound) data decoded by the decoding unit 40.

The recognizing unit 35 performs processing on video (sound) data [E] received from the communication terminal 5. Specifically, for example, the recognizing unit 35 recognizes the face, age, sex, and the like of men or animals based on videos taken by a camera 62 described below for signage. For offices, the recognizing unit 35 performs name tagging by face recognition and processing of replacing a background video based on videos taken by the camera 62 described below. The recognizing unit 35 stores recognition information 23A indicating the recognized details in the storage unit 23. The recognizing unit 35 achieves speeding up by performing processing with a recognition expansion board.

The delay information acquisition unit 37a corresponds to a delay information acquisition unit 57 used for the processing of upstream channel adaptive control (for the communication from the communication terminal 5 to the distribution management apparatus 2), and is used for the processing of downstream channel adaptive control (for the communication from the distribution management apparatus 2 to the communication terminal 5). Specifically, the delay information acquisition unit 37a acquires transmission delay time information (d1) indicating transmission delay time d1 from the decoding unit 40 and holds it for a certain period of time, and when a plurality of pieces of transmission delay time information (d1) are acquired, outputs to the channel adaptive controller 37b transmission delay time information (d) indicating frequency distribution information by a plurality of pieces of transmission delay time d1.

The channel adaptive controller 37b is used for the processing of the upstream channel adaptive control correspondingly to the channel adaptive controller 27 described above for use in the processing of the downstream channel adaptive control. Specifically, the channel adaptive controller 37b calculates the operation conditions of the encoding unit 60 based on the transmission delay time information (d). The channel adaptive controller 37b transmits a channel adaptive control signal indicating operation conditions such as a frame rate and data resolution to the encoding unit 60 of the communication terminal 5 through the transmitter/receiver 31 and the transmitter/receiver 51 described below.

The decoding unit 40 decodes the video (sound) data [E] transmitted from the communication terminal 5.

Functional configuration of communication terminal

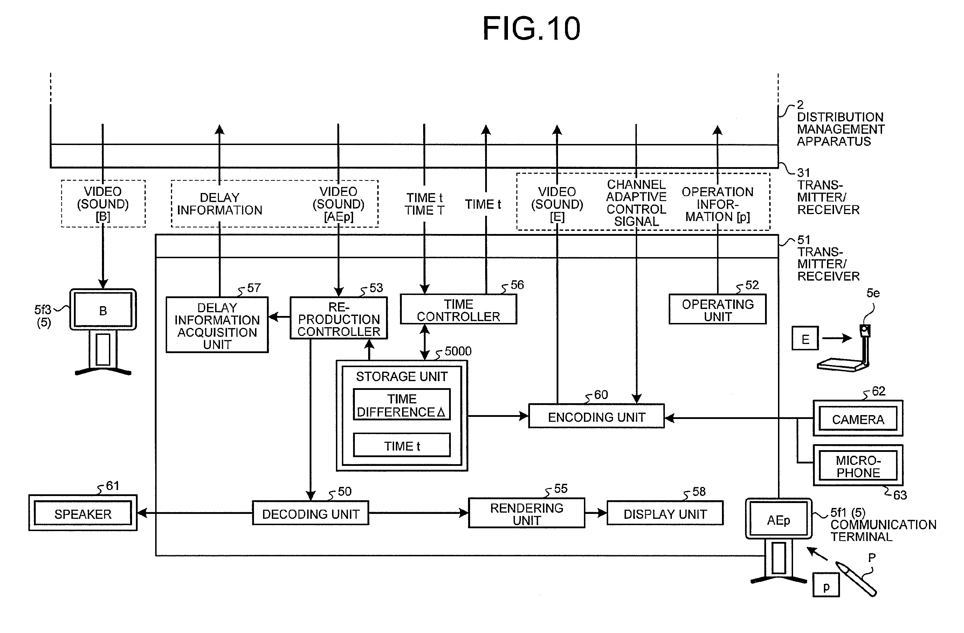

Described next with reference to FIG. 10 is the functional configuration of the communication terminal 5. FIG. 10 is a functional block diagram illustrating mainly the functions of the communication terminal 5. Although FIG. 10 illustrates the communication terminal 5f1 as an example of the communication terminal 5, any communication terminal 5 other than the communication terminal 5f1 has similar functional components. Among the communication terminals 5, any communication terminal 5 in which a user application is installed serves as an interface for allowing the user to perform a login to the distribution system 1, start or stop the distribution of video (sound) data, and other operations. Any communication terminal 5 in which a device application is installed only transmits and receives video (sound) data and transmits operation information, without having the interface. The following describes the communication terminal 5 in which the user application is installed, for convenience.

The communication terminal 5 is provided with the functional components illustrated in FIG. 10 by the same hardware configuration and program (user application) as those in FIG. 7. Specifically, the communication terminal 5 includes a decoding unit 50, the transmitter/receiver 51, an operating unit 52, the reproduction controller 53, a rendering unit 55, a time controller 56, the delay information acquisition unit 57, a display unit 58, and the encoding unit 60. The communication terminal 5 further includes a storage unit 5000 constructed by the RAM 203 illustrated in FIG. 7. This storage unit 5000 stores therein time difference information ($\Delta$) indicating a time difference $\Delta$ described below and time information (t) indicating time t in the communication terminal 5.

The decoding unit 50 decodes video (sound) data [AEp] distributed from the distribution management apparatus 2 and output from the reproduction controller 53.

The transmitter/receiver 51 transmits and receives various data, requests, and the like to and from the transmitter/receiver 31 of the distribution management apparatus 2 and a transmitter/receiver 71a of the terminal management apparatus 7 described below. For example, in the login processing of the communication terminal 5, the transmitter/receiver 51 performs a login request to the transmitter/receiver 71 of the terminal management apparatus 7 based on the startup of the communication terminal 5 by the operating unit 52.

The operating unit 52 performs processing to receive operation input by a user. For example, the operating unit 52 receives input, selection, or the like with a power switch, a keyboard, a mouse, the electronic pen P, or the like, and transmits it as operation information [p] to the browser management unit 22 of the distribution management apparatus 2.

The reproduction controller 53 buffers the video (sound) data [AEp] (a packet of real-time data) received from the transmitter/receiver 51 and outputs it to the decoding unit 50 considering reproduction delay time U.

The rendering unit 55 renders the data decoded by the decoding unit 50.

The time controller 56 performs time adjustment processing in conjunction with the time acquisition unit 26 of the distribution management apparatus 2. Specifically, the time controller 56 acquires time information (t) indicating time t in the communication terminal 5 from the storage unit 5000. The time controller 56 issues a request for time information (T) indicating time T in the distribution management apparatus 2 to the time acquisition unit 26 of the distribution management apparatus 2 through the transmitter/receiver 51 and the transmitter/receiver 31. In this case, the time information (t) is transmitted concurrently with the request for the time information (T).

The delay information acquisition unit 57 acquires from the reproduction controller 53 transmission delay time information (D1) indicating transmission delay time D1 and holds it for a certain period of time, and when a plurality of pieces of transmission delay time information (D1) are acquired, outputs transmission delay time information (D) indicating frequency distribution information by a plurality of pieces of transmission delay time D1 to the channel adaptive controller 27 through the transmitter/receiver 51 and the transmitter/receiver 31. The transmission delay time information (D) is transmitted, for example, once in a hundred frames.

The display unit 58 reproduces the data rendered by the rendering unit 55.

The encoding unit 60 transmits video (sound) data [E] that is acquired from a built-in microphone 213 (refer to FIG. 7) or the camera 62 and a microphone 63, which are externally attached, and is encoded, time information (to) indicating the current time to in the communication terminal 5 acquired from the storage unit 5000, and the time difference information ($\Delta$) indicating the time difference $\Delta$ acquired from the storage unit 5000 to the decoding unit 40 of the distribution management apparatus 2 through the transmitter/receiver 51 and the transmitter/receiver 31. The operation conditions of the encoding unit 60 are changed based on the channel adaptive control signal received from the channel adaptive controller 37b. When the operation conditions are changed, the encoding unit 60, in accordance with the new operation conditions, transmits the video (sound) data [E] that is acquired from the camera 62 and the microphone 63 and is encoded, the time information (to) indicating the current time to in the communication terminal 5 acquired from the storage unit 5000, and the time difference information ($\Delta$) indicating the time difference $\Delta$ acquired from the storage unit 5000 to the decoding unit 40 of the distribution management apparatus 2 through the transmitter/receiver 51 and the transmitter/receiver 31.

The built-in microphone 213, and the externally attached camera 62 and the microphone 63 are examples of an inputting unit and are devices that need encoding and decoding. The inputting unit may output touch data and smell data in addition to video (sound) data. The inputting unit includes various sensors such as a temperature sensor, a direction sensor, an acceleration sensor, and the like.

FIG. 10 illustrates an example in which a communication terminal 5e as a TV conference terminal is connected to the communication terminal 5f1 as the electronic blackboard. Specifically, illustrated is a case of the blackboard capable of receiving an operation path drawn by the user, and electronically converting the operation path. In the illustration, a camera and a microphone of the communication terminal 5e are used as the external camera 62 and microphone 63 of the communication terminal 5f1. FIG. 10 assumes a case in which the communication terminal 5f1 and the communication terminal 5f3 as the object of remote sharing processing are projectors that reproduce video (sound).

Functional configuration of the terminal management apparatus

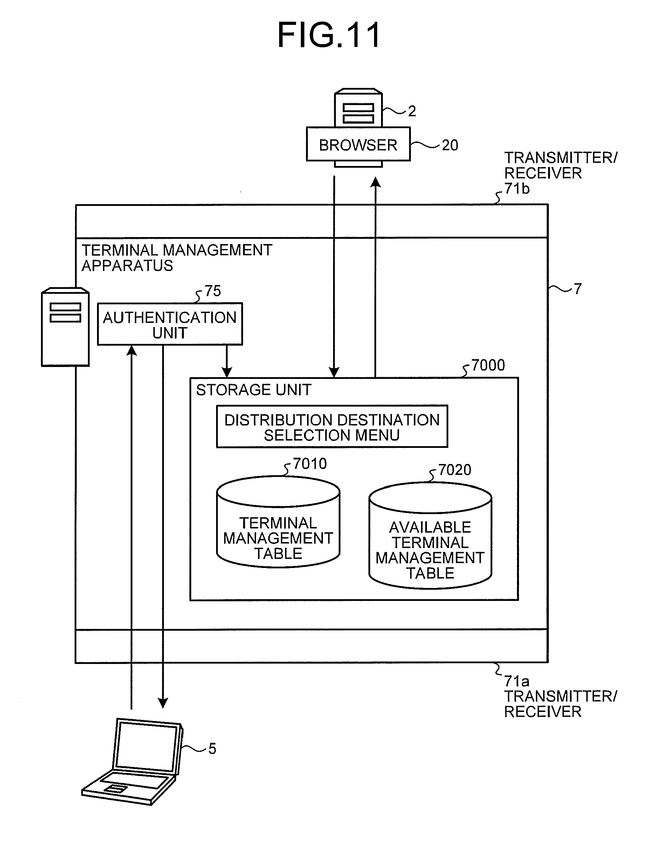

Described next with reference to FIG. 11 is the functional configuration of the terminal management apparatus 7. FIG. 11 is a functional block diagram illustrating the functions of the terminal management apparatus 7.

The terminal management apparatus 7 achieves functional components illustrated in FIG. 11 by similar hardware configuration and the programs to those in FIG. 7. Specifically, the terminal management apparatus 7 includes the transmitter/receiver 71a, a transmitter/receiver 71b, and an authentication unit 75. The terminal management apparatus 7 further includes a storage unit 7000 constructed by the HDD 204 illustrated in FIG. 7. The storage unit 7000 stores therein distribution destination selection menu data, a terminal management table 7010, and an available terminal management table 7020.

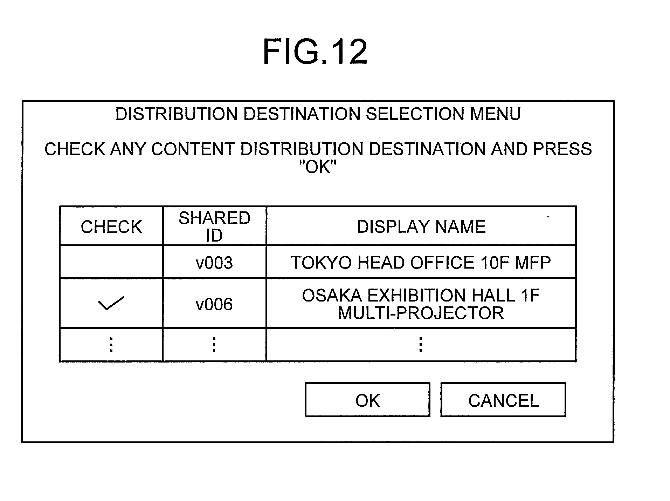

The distribution destination selection menu is data indicating such a destination selection menu screen as illustrated in FIG. 12. FIG. 12 is a conceptual diagram of a distribution destination selection menu screen. The distribution destination selection menu screen illustrated in FIG. 12 displays shared IDs and display names (described below) in a list form for the communication terminal 5 that can be selected as a distribution destination of video (sound) data. The user checks the item representing the communication terminal 5 desired as a distribution destination of video (sound) data on this distribution destination selection menu screen and presses the "OK" button, whereby the video (sound) data is distributed to the desired communication terminal 5.

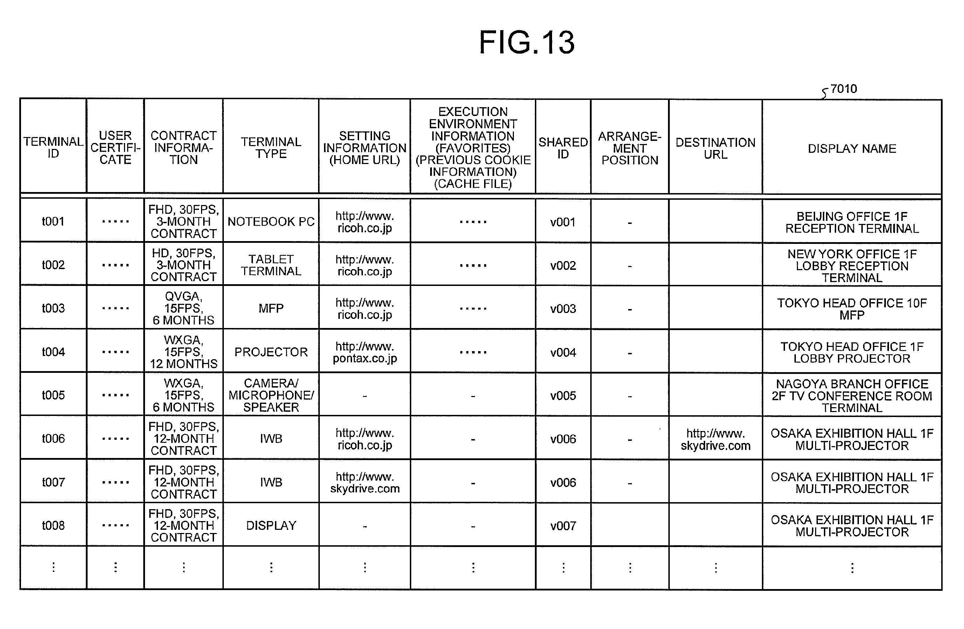

FIG. 13 is a conceptual diagram of a terminal management table 7010. As illustrated in FIG. 13, the terminal management table 7010 manages the terminal ID of the registered communication terminal 5, a user certificate, contract information when a user uses the services of the distribution system 1, the terminal type of the communication terminal 5, setting information indicating the home uniform resource locators (URLs) of the respective communication terminals 5, the execution environment information of the respective communication terminals 5, a shared ID, an arrangement position, a linked URL, and display name information in association with each other. The information indicating arrangement position may be referred to as arrangement position information below.

The user certificate is a certificate that certifies that the communication terminal 5 is permitted to connect to the distribution system 1. The user certificate is issued in advance to the communication terminal permitted to connect to the distribution system 1. The contract information indicates the contents of a contract when a user who uses the communication terminal 5 identified by the terminal ID uses a service of the distribution system 1. The terminal type indicates the type of the communication terminal 5. The terminal ID, the setting information (home URL), and the destination URL are the same as those in the drawing table 23C (refer to FIG. 9).

The execution environment information includes "favorites", "previous Cookie information", and "cache file" of the respective communication terminals 5, which are sent to the distribution management apparatus 2 together with the setting information after the login of each communication terminal 5 and are used for performing an individual service on each communication terminal 5.

The shared ID is an ID that is used when each user distributes the same video (sound) data as video (sound) data being distributed to his/her own communication terminal 5 to the other communication terminals 5, thereby performing remote sharing processing and is identification information that identifies the other communication terminals and the other communication terminal group. In the example illustrated in FIG.13, the shared ID of the terminal ID "t006" is "v006", and the shared ID of the terminal ID "t007" is "v006". In this case, when a request for remote sharing processing with the communication terminals 5f1, 5f3 with the shared ID "v006" is issued from the communication terminal 5a with the terminal ID "t001", the distribution management apparatus 2 distributes the same video (sound) data as video (sound) data being distributed to the communication terminals 5a to the communication terminals 5f1, 5f3. However, when the communication terminals 5 and the communication terminals 5f1, 5f2 are different in the resolution of the display unit 58, the distribution management apparatus 2 distributes the video (sound) data accordingly.

As illustrated in FIG. 5, for example, the arrangement position indicates an installation position when the communication terminals 5f1, 5f2, 5f3 are arranged side by side. The display name is information indicating the details of the display name in the distribution destination selection menu illustrated in FIG. 12.

FIG. 14 is a conceptual diagram of an available terminal management table 7020. The available terminal management table 7020 manages, in association with each terminal ID, a shared ID indicating another communication terminal or another communication terminal group with which the communication terminal 5 indicated by the terminal ID can perform remote sharing processing.

Returning back to FIG. 11, the storage unit 7000 stores therein user information required for the services of the distribution system 1 and permanent data such as device information. The storage unit 7000 stores therein various kinds of information used for the management of the distribution system 1 such as distribution information indicating the state (disconnected state/standby state/busy) of the communication terminal 5 and load information indicating the load state of the distribution management apparatus 2.

The storage unit 7000 may be stored in an external storage device and may be configured to be separated from the distribution management apparatus 7. In this case, the storage unit 7000 may be connected to the distribution management apparatus 7 with Transmission Control Protocol/Internet Protocol (TCP/IP), for example.

The transmitter/receiver 71a transmits and receives various data, requests, and the like to and from the communication terminal 5. For example, the transmitter/receiver 71a receives a login request from the transmitter/receiver 51 of the communication terminal 5 and transmits an authentication result of the login request to the transmitter/receiver 51. The login request is an authentication request for the communication terminal 5 to the distribution system 1. The login request includes a terminal ID that uniquely identifies the communication terminal 5 and the user certificate.

The transmitter/receiver 71b transmits and receives various data, requests, and the like to and from the distribution management apparatus 2. For example, the transmitter/receiver 71b receives a request for the data of the distribution destination selection menu from the transmitter/receiver 21 of the distribution management apparatus 2 and transmits the data of the distribution destination selection menu to the transmitter/receiver 21.

The authentication unit 75 searches the terminal management table 7010 based on the terminal ID and the user certificate in the login request received from the communication terminal 5, thereby determining whether there are any terminal ID and user certificate of the same combination, thereby authenticating the communication terminal 5a.


Operations or processing of the embodiment

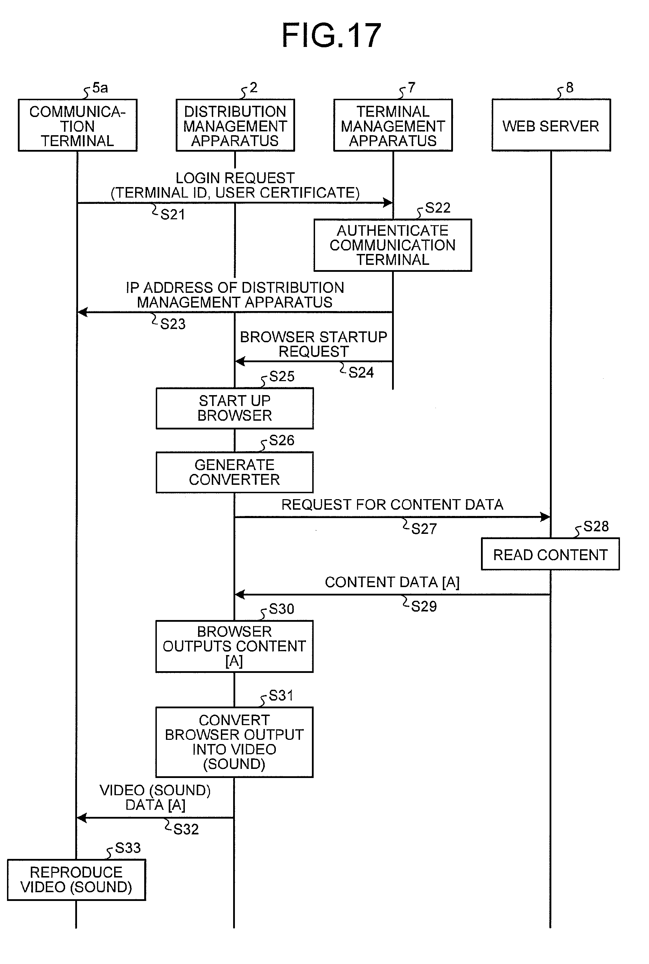

Described next with reference to FIG. 17 to FIG. 25 are operations or pieces of processing of the present embodiment.


Basic Distribution Processing

Described first with reference to FIG. 17 is specific distribution processing in a basic distribution method of the distribution management apparatus 2. FIG. 17 is a sequence diagram illustrating the basic distribution processing of the distribution management apparatus 2. Although a case is described in which a login is requested through the communication terminal 5a, the login may be performed through the communication terminal 5 other than the communication terminal 5a.

As illustrated in FIG. 17, when a user turns on the power of the communication terminal 5a, the transmitter/receiver 51 of the communication terminal 5a issues a login request to the authentication unit 75 through the transmitter/receiver 71a of the terminal management apparatus 7 (Step S21). This login request includes the terminal ID and the user certificate of the communication terminal 5a.

The authentication unit 75 of the terminal management apparatus 7 searches the terminal management table 7010 based on the terminal ID and the user certificate received from the communication terminal 5a, thereby determining whether there are any terminal ID and user certificate of the same combination, thereby authenticating the communication terminal 5a (Step S22). Described below continuously is a case when the terminal ID and the user certificate of the same combination are present in the terminal management table 7010, that is, when the communication terminal 5a is determined as a proper terminal in the distribution system 1.

The authentication unit 75 of the terminal management apparatus 7 transmits the IP address of the distribution management apparatus 2 to the transmitter/receiver 51 of the communication terminal 5a through the transmitter/receiver 71a (Step S23). The IP address of the distribution management apparatus 2 is acquired by the terminal management apparatus 7 and is stored in the storage unit 7000 in advance.

The transmitter/receiver 71b of the terminal management apparatus 7 issues a browser 20 startup request to the browser management unit 22 through the transmitter/receiver 21 of the distribution management apparatus 2 (Step S24). In response to this startup request, the browser management unit 22 of the distribution management apparatus 2 starts up the browser 20 (Step S25). The generating/selecting unit 310 of the encoder bridge unit 30 generates the convertor 10 in accordance with the reproduction capability of the communication terminal 5a (the resolution of the display and the like) and the type of content (Step S26).

Next, the browser 20 issues a request for content data [A] to the web server 8 (Step S27). In response thereto, the web server 8 reads the requested content data [A] from its own storage unit (not illustrated) (Step S28). The web server 8 transmits the content data [A] to the browser 20 that is a request source through the transmitter/receiver 21 of the distribution management apparatus 2 (Step S29).

The browser 20 renders the content data [A] to generate video (sound) data [A] and transmits it to the transmission FIFO 24 (Step S30). The convertor 10 encodes the pieces of image (sound) data [A] stored in the transmission FIFO 24, thereby converting them into video (sound) data [A] to be output to the communication terminal 5a (Step S31).

The encoder bridge unit 30 transmits the video (sound) data [A] to the reproduction controller 53 through the transmitter/receiver 31 and the transmitter/receiver 51 (Step S32). In response to this, the communication terminal 5a outputs the video (sound) data [A] from the reproduction controller 53 to the decoding unit 50, thereby reproducing sound from a speaker 61 and reproducing video on the display unit 58 through the rendering unit 55 (Step S33).

Processing of time adjustment

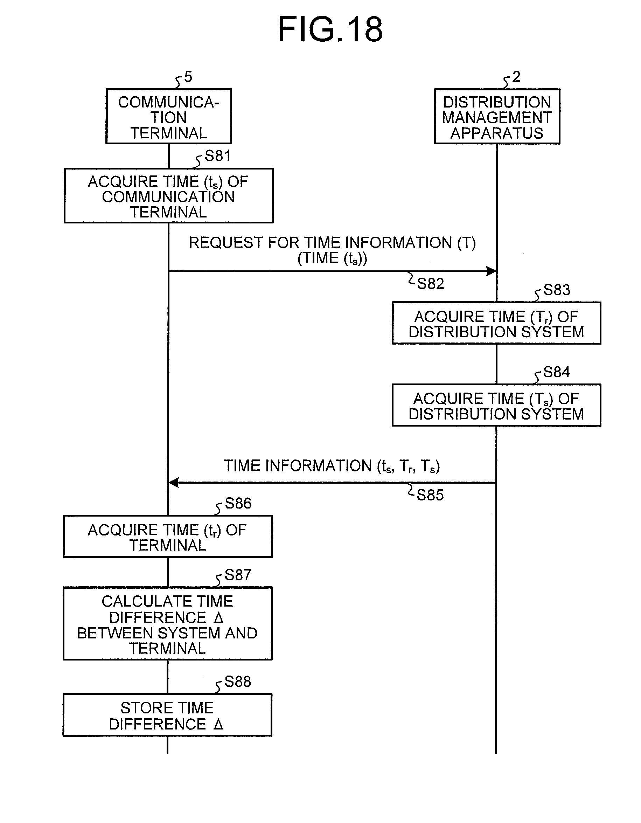

Described next with reference to FIG. 18 is the processing of time adjustment. FIG. 18 is a sequence diagram illustrating the processing of time adjustment performed between the distribution management apparatus 2 and the communication terminal 5.

In order to acquire time indicating a point in time when the transmitter/receiver 51 issues a request for the time information (T) to the distribution management apparatus 2, the time controller 56 of the communication terminal 5 acquires time information ($t_s$) in the communication terminal 5 from the storage unit 5000 (Step S81). The transmitter/receiver 51 issues a request for the time information (T) in the distribution management apparatus 2 to the transmitter/receiver 31 (Step S82). In this case, the time information ($t_s$) is transmitted concurrently with the request for the time information (T).

In order to acquire time indicating a point in time when the transmitter/receiver 31 received the request at Step S82, the time acquisition unit 26 acquires time information ($T_r$) in the distribution management apparatus 2 from the time management unit 25 (Step S83). In order to acquire time indicating a point in time when the transmitter/receiver 31 responds to the request at Step S82, the time acquisition unit 26 further acquires time information ($T_s$) in the distribution management apparatus 2 from the time management unit 25 (Step S84). The transmitter/receiver 31 then transmits the time information ($t_s$, $T_r$, $T_s$) to the transmitter/receiver 51 (Step S85).

In order to acquire time indicating a point in time when the transmitter/receiver 51 received the response at Step S85, the time controller 56 of the communication terminal 5 acquires time information ($t_r$) in the communication terminal 5 from the storage unit 5000 (Step S86). The time controller 56 of the communication terminal 5 calculates the time difference $\Delta$ between the distribution management apparatus 2 and the communication terminal 5 (Step S87). This time difference $\Delta$ is represented by Equation (1) below.

$$\Delta = ((T_r + T_s)/2) - ((t_r + t_s)/2) \qquad (1)$$

The time controller 56 stores the time difference information ($\Delta$) indicating the time difference $\Delta$ in the storage unit 5000 (Step S88). The series of processing of time adjustment is performed, for example, regularly every minute.

Processing of downstream channel adaptive control

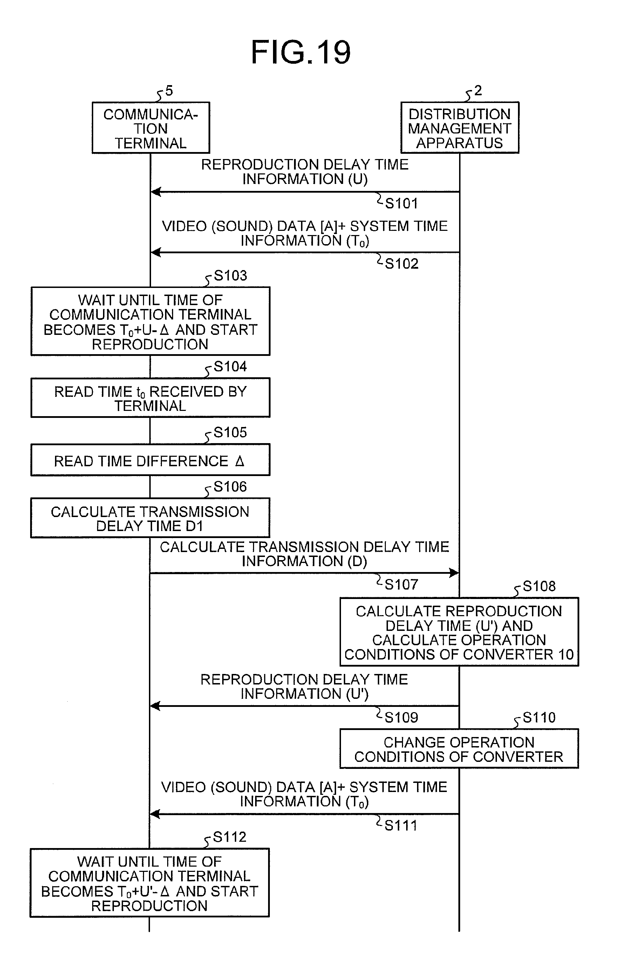

Described next with reference to FIG. 19 is the processing of channel adaptive control on data transmitted from the distribution management apparatus 2 to the communication terminal 5 (downstream). FIG. 19 is a sequence diagram illustrating the processing of channel adaptive control on data transmitted from the distribution management apparatus 2 to the communication terminal 5.

First, the encoder bridge unit 30 of the distribution management apparatus 2 transmits reproduction delay time information (U) for buffering to delay the reproduction to the reproduction controller 53 of the communication terminal 5 through the transmitter/receiver 31 and the transmitter/receiver 51 (Step S101). The encoder bridge unit 30 adds the current time To as a time stamp acquired from the time management unit 25 to the video (sound) data acquired from the transmission FIFO 24 and subjected to encoding or other operations, and transmits them to the reproduction controller 53 of the communication terminal 5 through the transmitter/receiver 31 and the transmitter/receiver 51 (Step S102).

In the communication terminal 5, the reproduction controller 53 waits until the time (To + U - $\Delta$) in the communication terminal 5 and then outputs the video (sound) data to the decoding unit 50, thereby causing the speaker 61 to reproduce sound and the display unit 58 to reproduce video through the rendering unit 55 (Step S103). This causes only video (sound) data the communication terminal 5 received within the range of the reproduction delay time U represented by Equation (2) below to be reproduced, while video (sound) data out of the range is deleted without being reproduced.

$$U \geq (t_0 + \Delta) - T_0 \qquad (2)$$

The reproduction controller 53 reads the current time to in the communication terminal 5 from the storage unit 5000 (Step S104). This time to indicates time in the communication terminal 5 at a point in time when the communication terminal 5 received video (sound) data from the distribution management apparatus 2. The reproduction controller 53 further reads the time difference information ($\Delta$) indicating the time difference $\Delta$ stored at Step S86 from the storage unit 5000 (Step S105). The reproduction controller 53 then calculates transmission delay time D1 indicating time from when the video (sound) data is transmitted from the distribution management apparatus 2 to when the communication terminal 5 receives the video (sound) data using the time To, the time to, and the time difference $\Delta$ (Step S106). This calculation is performed by Equation (3) below; when the communication network 9 becomes congested, the transmission delay time D1 becomes longer.

$$D1 = (t_0 + \Delta) - T_0 \tag{3}$$

The delay information acquisition unit 57 acquires transmission delay time information (D1) indicating the transmission delay time D1 from the reproduction controller 53 and holds it for a certain time, and when a plurality of pieces of transmission delay time information (D1) are acquired, transmits transmission delay time information (D) indicating frequency distribution information on a plurality of pieces of transmission delay time D1 to the channel adaptive controller 27 of the distribution management apparatus 2 through the through the transmitter/receiver 31 and the transmitter/receiver 51 (Step S107).

The channel adaptive controller 27 of the distribution management apparatus 2 newly calculates reproduction delay information U' based on the transmission delay time information (D) and calculates the operation conditions such as the frame rate and the data resolution of the convertor 10 (Step S108).

The encoder bridge unit 30 of the distribution management apparatus 2 transmits reproduction delay time information (U') indicating the new reproduction delay time U' calculated at Step S108 to the reproduction controller 53 of the communication terminal 5 through the transmitter/receiver 31 and the transmitter/receiver 51 (Step S109).

The convertor 10 of the encoder bridge unit 30 further changes the operation conditions based on the channel adaptive control signal (Step S110). For example, when the transmission delay time D1 is too long, when the reproduction delay time U is made longer in accordance with the transmission delay time D1, reproduction time at the speaker 61 and the display unit 58 becomes too delayed. As a result, there is a limit to making the reproduction delay time U longer. In view of this, the channel adaptive controller 27 not only causes the encoder bridge unit 30 to change the reproduction delay time U to be the reproduction delay time U' but also causes the convertor 10 to decrease the frame rate of video (sound) data and to decrease the resolution of video (sound) data, thereby addressing the congestion of the communication network 9. In response to this, the encoder bridge unit 30 transmits the video (sound) data with the current time To added as a time stamp to the reproduction controller 53 of the communication terminal 5 in accordance with the changed operation conditions as Step S102 (Step S111).

In the communication terminal 5, reproduction delay time information (U') the reproduction controller 53 waits until the time (To + U' -$\Delta$) in the communication terminal 5 and then outputs the video (sound) data received within the reproduction delay time (U') to the decoding unit 50, thereby, as with Step S103, causing the speaker 61 to output a sound and the display unit 58 to reproduce video through the rendering unit 55 (Step S112). After that, the processing at and after Step S104 is performed continuously. Thus, the processing of the downstream channel adaptive control is performed continuously.

Processing of upstream channel adaptive control

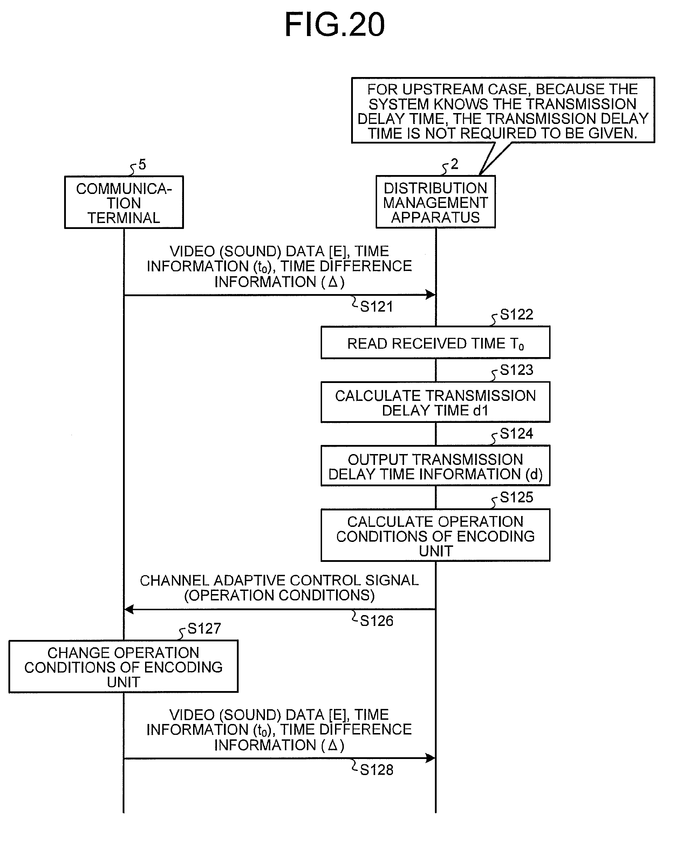

Described next with reference to FIG. 20 is the processing of channel adaptive control on data transmitted from the communication terminal 5 to the distribution management apparatus 2 (upstream). FIG. 20 is a sequence diagram illustrating the processing of channel adaptive control on data transmitted from the communication terminal 5 to the distribution management apparatus 2.

First the encoding unit 60 of the communication terminal 5 encodes video and sound acquired from the camera 62 and the microphone 63 in video (sound) data [E], thereafter, transmits the video (sound) data [E], the time information (to) indicating the current time to in the communication terminal 5 acquired from the storage unit 5000, and the time difference information ($\Delta$) indicating the time difference $\Delta$ acquired from the storage unit 5000 to the decoding unit 40 of the distribution management apparatus 2 through the transmitter/receiver 31 and the transmitter/receiver 51 (Step S121).

In the distribution management apparatus 2, the decoding unit 40 reads time To indicating a point in time when the video (sound) data [E] and the like were received at Step S121 from the time management unit 25 (Step S122). The decoding unit 40 then calculates transmission delay time d1 indicating time from when the video (sound) data is transmitted from the communication terminal 5 to when it is received by the distribution management apparatus 2 (Step S123). This calculation is performed by Equation (4) below; when the communication network 9 becomes congested, the transmission delay time D1 becomes longer.

$$d1 = T_0 - (t_0 + \Delta) \tag{4}$$

As is the case with the delay information acquisition unit 57 of the communication terminal 5, the delay information acquisition unit 37a of the distribution management apparatus 2 acquires transmission delay time information (d1) indicating transmission delay time d1 from the decoding unit 40 and holds it for a certain period of time, and when a plurality of pieces of transmission delay time information (d1) are acquired, outputs to the channel adaptive controller 37b transmission delay time information (d) indicating frequency distribution information by a plurality of pieces of transmission delay time d1 (Step S124).

The channel adaptive controller 37b calculates the operation conditions of the encoding unit 60 of the communication terminal 5 based on the transmission delay time information (d) (Step S125). The channel adaptive controller 37b transmits the channel adaptive control signal indicating operation conditions such as a frame rate and data resolution to the encoding unit 60 of the communication terminal 5 through the transmitter/receiver 31 and the transmitter/receiver 51 (Step S126). In other words, the channel adaptive controller 27 for the downstream case outputs the channel adaptive control signal to the encoder bridge unit 30 within the same distribution management apparatus 2, whereas the channel adaptive controller 37b for the upstream case outputs the channel adaptive control signal from the distribution management apparatus 2 to the communication terminal 5 through the communication network 9.

The encoding unit 60 of the communication terminal 5 changes the operation conditions based on the received channel adaptive control signal (Step S127). The encoding unit 60, based on the new operation conditions, encodes video and sound acquired from the camera 62 and the microphone 63 in the video (sound) data [E], thereafter, transmits the video (sound) data [E], the time information (to) indicating the current time to in the communication terminal 5 acquired from the storage unit 5000, and the time difference information ($\Delta$) indicating the time difference $\Delta$ similarly acquired from the storage unit 5000 to the decoding unit 40 of the distribution management apparatus 2 through the transmitter/receiver 31 and the transmitter/receiver 51, as Step S121 (Step S128). After that, the processing at and after Step S122 is performed continuously. Thus, the processing of the upstream channel adaptive control is performed continuously.

Processing of multidisplay

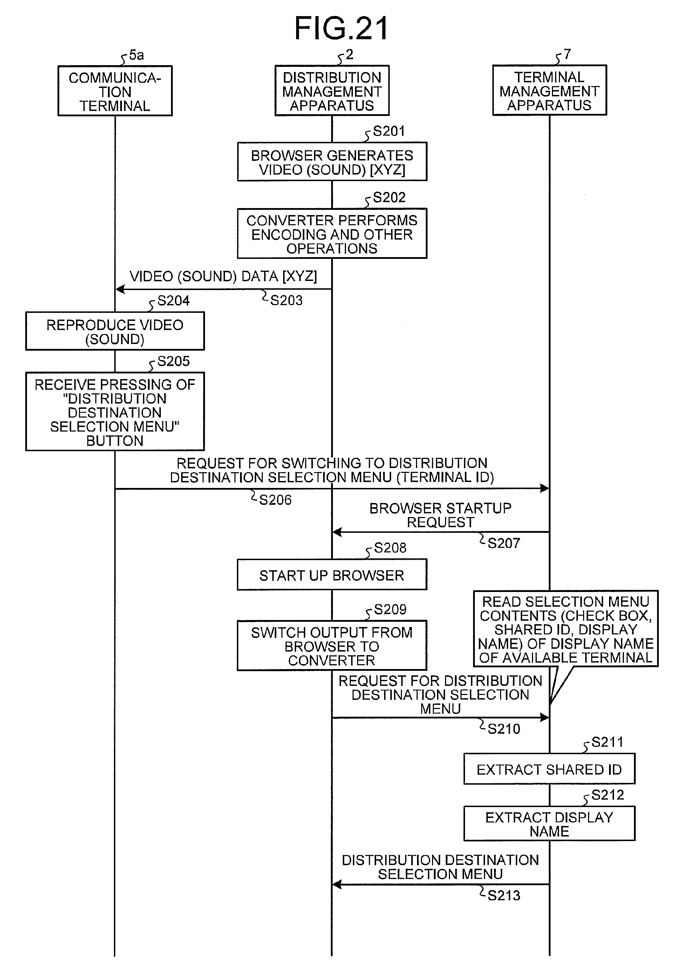

Described next with reference to FIG. 21 to FIG. 23 is the processing of multidisplay. FIG. 21 to FIG. 23 are sequence diagrams illustrating the processing of multidisplay illustrated in FIG. 5. Described here is an example of reproducing video (sound) [XYZ] being reproduced on the communication terminal 5a also on the communication terminals (5f1, 5f2, 5f3) in a divided manner.

The browser 20 for displaying web content is represented as a "browser 20a", and the browser 20 for displaying a setting screen for a user is represented as a "browser 20b". Described first is processing corresponding to Step S30 in FIG. 17.

First, as illustrated in FIG. 21, the browser 20a of the distribution management apparatus 2 renders web content data [XYZ] acquired from the web server 8 to generate image (sound) data and outputs it to the transmission FIFO 24 (Step S201). The converter 10 of the encoder bridge unit 30 encodes the image (sound) data stored in the transmission FIFO 24, thereby converting it into video (sound) data [XYZ] to be distributed to the communication terminal 5a (Step S202).

The encoder bridge unit 30 transmits the video (sound) data [XYZ] to the reproduction controller 53 of the communication terminal 5a through the transmitter/receiver 31 and the transmitter/receiver 51 (Step S203). In response to this, the communication terminal 5a outputs the video (sound) data [XYZ] from the reproduction controller 53 to the decoding unit 50, thereby reproducing video (sound) on the display unit 58 through the rendering unit 55 (Step S204).

A screen displayed on the display unit 58 is switched to a menu request screen (not illustrated) by the user of the communication terminal 5a, and the operating unit 52 receives the pressing of a "distribution destination selection menu" (not illustrated) on the menu request screen (Step S205). This causes the transmitter/receiver 51 to request for switching to the distribution destination selection menu to the transmitter/receiver 71a of the terminal management apparatus 7 (Step S206). In this situation, the terminal ID of the communication terminal 5a is also transmitted. In response thereto, the transmitter/receiver 71b issues a browser 20b startup request to the browser management unit 22 of the distribution management apparatus 2 through the transmitter/receiver 21 (Step S207).

The generating/selecting unit 310 of the encoder bridge unit 30 starts up the browser 20b (Step S208) and switches the output from the browser 20a to the convertor 10 (e.g., the convertor 10a) to the output from the browser 20b to the convertor 10 (e.g., the convertor 10b) (Step S209). When the communication terminal 5a and another communication terminal 5 (e.g., the communication terminal 5b) are receiving the video (sound) data at Step S203 with the convertor 10 (e.g., the convertor 10a) shared, the generating/selecting unit 310 of the encoder bridge unit 30 newly generates the convertor 10 (e.g., the convertor 10b), because the other communication terminal 5 (e.g., the communication terminal 5b) is using the convertor 10 (e.g., the convertor 10a) for the browser 20a.

The browser 20b requests a distribution destination selection menu from the storage unit 7000 of the distribution management apparatus 7 through the transmitter/receiver 21 and the transmitter/receiver 71b (Step S210). In response thereto, the storage unit 7000 of the distribution management apparatus 7 searches the available terminal management table 7020 stored in the storage unit 7000 based on the terminal ID received from the communication terminal 5a, thereby extracting a shared ID (Step S211). This shared ID indicates a communication terminal 5 available by the communication terminal 5a to perform the remote sharing processing. When the terminal ID of the communication terminal 5a is "t001", for example, the available terminal management table 7020 illustrated in FIG. 14 is searched, thereby extracting shared IDs "v003" and "v006".

The storage unit 7000 further searches the terminal management table 7010 based on the extracted shared ID, thereby extracting display name information indicating the corresponding display name (Step S212). As illustrated in FIG. 13, display names corresponding to the extracted shared IDs "v003" and "v006" are "Tokyo head office 10F MFP" and "Osaka exhibition hall 1F multiprojector", respectively.

The storage unit 7000 transmits the data of the distribution destination selection menu as content data to the browser 20b of the distribution management apparatus 2 through the transmitter/receiver 71b and the transmitter/receiver 21 (Step S213). This distribution destination selection menu includes the check boxes, shared IDs, and display names as illustrated in FIG. 12.

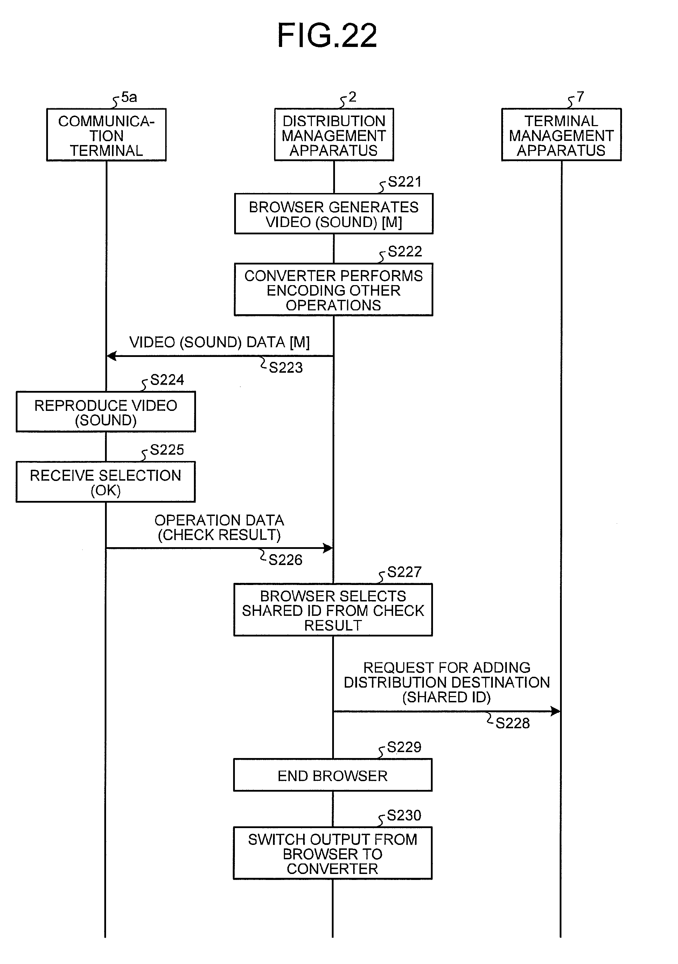

As illustrated in FIG. 22, the browser 20b of the distribution management apparatus 2 renders content data indicating a distribution destination selection menu [M] acquired from the distribution management apparatus 7 to generate image (sound) data and outputs it to the transmission FIFO 24 (Step S221). The converter 10 of the encoder bridge unit 30 encodes the image (sound) data [M] stored in the transmission FIFO 24, thereby converting into video (sound) data [M] to be distributed to the communication terminal 5a (Step S222).

The encoder bridge unit 30 then transmits the video (sound) data [M] to the reproduction controller 53 of the communication terminal 5a through the transmitter/receiver 31 and the transmitter/receiver 51 (Step S223). In response to this, the communication terminal 5a outputs the video (sound) data [M] from the reproduction controller 53 to the decoding unit 50, thereby reproducing the video (sound) of the distribution destination selection menu as illustrated in FIG. 12 on the display unit 58 through the rendering unit 55 (Step S224).

When an operation to designate the communication terminal 5 to be used for multidisplay, for example, the check box of the shared ID "v006" of the distribution destination selection menu screen illustrated in FIG. 12 is checked and the "OK" button is pressed (Step S225) by the user, the operating unit 52 transmits the result of the check operation to the browser management unit 22 of the distribution management apparatus 2 through the transmitter/receiver 51 and the transmitter/receiver 31 (Step S226).

The browser 20b of the distribution management apparatus 2 selects a shared ID from the result of the check operation (Step S227). The browser 20b issues a request for adding a distribution destination to the storage unit 7000 of the distribution management apparatus 7 through the transmitter/receiver 21 and the transmitter/receiver 71b (Step S228). This request for adding a distribution destination includes the shared ID selected at Step S227. The browser 20b then ends its role to end (Step S229). After that, the generating/selecting unit 310 of the encoder bridge unit 30 switches the output from the browser 20b to the converter 10 to the output from the browser 20a to the converter 10 (Step S230).

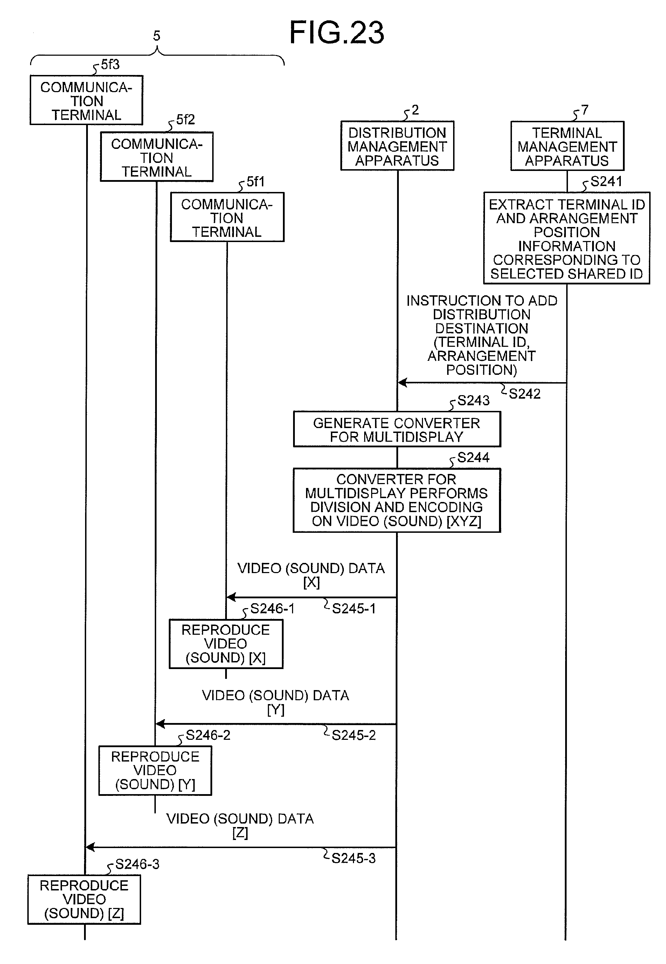

As illustrated in FIG. 23, in the storage unit 7000 of the terminal management apparatus 7, the terminal management table 7010 is searched based on the shared ID sent through Step S228, thereby extracting the corresponding terminal ID and arrangement position information (Step S241). The storage unit 7000 performs issues an instruction to add a distribution destination to the browser management unit 22 of the distribution management apparatus 2 through the transmitter/receiver 71b and the transmitter/receiver 21 (Step S242). This instruction to add a distribution destination includes the terminal ID and the arrangement position information extracted at Step S241. Included here are three sets of the terminal ID and the arrangement position information, that is, the terminal ID and the arrangement position information are "t006" and "left", respectively, the terminal ID and the arrangement position information are "t007" and "middle", respectively, and the terminal ID and the arrangement position information are "t008" and "right", respectively. The communication terminals 5 identified by the terminal IDs "t006", "t007", and "t008" are the communication terminal 5f1, the communication terminal 5f2, and the communication terminal 5f3, respectively.

The generating/selecting unit 310 of the encoder bridge unit 30 generates a convertor 10 for multidisplay (Step S243). In this case, the generating/selecting unit 310 of the encoder bridge unit 30 acquires the terminal ID and the arrangement position information from the browser management unit 22. The dividing unit 13 of the convertor 10 generated at Step S243 divides the pieces of video (sound) data [XYZ] stored in the transmission FIFO 24, and the encoding unit 19 encodes the divided pieces of data (Step S244).

The encoder bridge unit 30 transmits the video (sound) data [X] to the reproduction controller 53 of the communication terminal 5f1 through the transmitter/receiver 31 and the transmitter/receiver 51 of the communication terminal 5f1 based on the terminal ID ("t006") and the arrangement position information ("left") (Step S245-1). In response to this, the communication terminal 5f1 outputs the video (sound) data [X] from the reproduction controller 53 to the decoding unit 50, thereby reproducing sound from the speaker 61, and reproducing video on the display unit 58 through the rendering unit 55 (Step S246-1).

Similarly, the encoder bridge unit 30 transmits the video (sound) data [Y] to the reproduction controller 53 of the communication terminal 5f2 through the transmitter/receiver 31 and the transmitter/receiver 51 of the communication terminal 5f2 based on the terminal ID ("t007") and the arrangement position information ("middle") (Step S245-2). In response to this, the communication terminal 5f2 outputs the video (sound) data [Y] from the reproduction controller 53 to the decoding unit 50, thereby reproducing sound from the speaker 61, and reproducing video on the display unit 58 through the rendering unit 55 (Step S246-2).

Similarly, the encoder bridge unit 30 transmits the video (sound) data [Z] to the reproduction controller 53 of the communication terminal 5f3 through the transmitter/receiver 31 and the transmitter/receiver 51 of the communication terminal 5f3 based on the terminal ID ("t008") and the arrangement position information ("right") (Step S245-3). In response to this, the communication terminal 5f3 outputs the video (sound) data [Z] from the reproduction controller 53 to the decoding unit 50, thereby reproducing sound from the speaker 61, and reproducing video on the display unit 58 through the rendering unit 55 (Step S246-3).

Processing of Communication with a Plurality of Communication Terminals

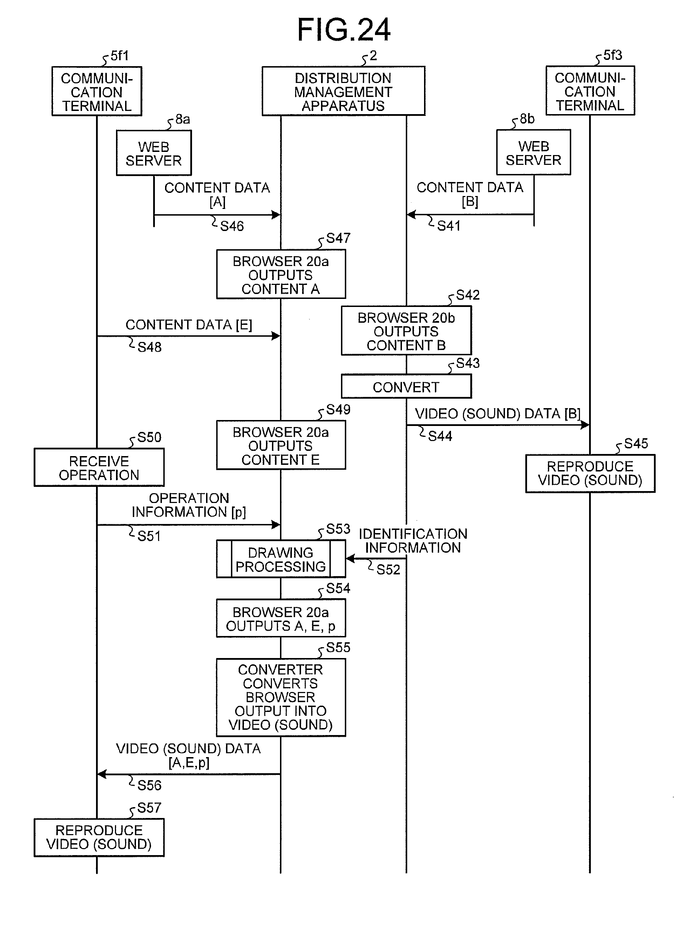

Described next with reference to FIG. 24 is remote sharing processing with the distribution management apparatus 2. FIG. 24 is a sequence diagram illustrating the remote sharing processing with the distribution management apparatus 2. Described here is specific processing for the pattern illustrated in FIG. 8 assuming the communication terminals 5f1, 5f3 as the communication terminals.

FIG. 8 and FIG. 24 assume that the communication terminal 5f1 (a first communication terminal) is an electronic blackboard that can receive operation paths drawn by a user and electronically convert the operation paths. It is also assumed that the other communication terminal as an object of the remote sharing processing with the communication terminals 5f1 is the communication terminals 5f3 (a second communication terminal) and that the communication terminal 5f3 is a projector that reproduces video (sound).

Although login processing, browser startup, and other operations similar to Step S21 to Step S29 in FIG. 17 are performed also here, the description of the processing corresponding to Step S21 to Step S28 in FIG. 17 are omitted, and described first is processing at Step S41 corresponding to Step S29.

As illustrated in FIG. 24, the browser 20b of the distribution management apparatus 2 receives content data [B] from the web server 8b through the transmitter/receiver 21 (Step S41). The browser 20b renders the content data [B], thereby generating video (sound) data, and outputs it to the transmission FIFO 24b (Step S42).

The converter 10 of the encoder bridge unit 30 converts the data format of the video (sound) data [B] stored in the transmission FIFO 24b into a data format allowing the video (sound) data [B] to be distributed to the communication terminal 5f3 (Step S43). The distribution management apparatus 2 transmits the converted video (sound) data [B] to the communication terminal 5f3 (Step S44).

The converted video (sound) data ([B]) is decoded by the decoding unit 50 of the communication terminal 5f3 to be output as sound from the speaker 61, or is rendered by the rendering unit 55 to be output as video to the display unit 58 (Step S45).

The browser 20a of the distribution management apparatus 2 receives content data [A] from the web server 8a through the transmitter/receiver 21 (Step S46). The browser 20a renders the content data [A], thereby generating video (sound) data, and outputs it to the transmission FIFO 24a (Step S47).

It is assumed that the encoding unit 60 of the communication terminal 5f1 has received the inputting of content data [E] from the camera 62 and the microphone 63. In this case, the encoding unit 60 of the communication terminal 5f1 encodes the content data [E] and then transmits it to the decoding unit 40 of the distribution management apparatus 2 through the transmitter/receiver 51 and the transmitter/receiver 31 (Step S48).

The content data [E] received by the distribution management apparatus 2 is decoded by the decoding unit 40 and is then output to the browser 20a through the reception FIFO 34. The browser 20a renders the content data [E], thereby generating image (sound) data [E], and outputs it to the transmission FIFO 24a (Step S49). In this case, the browser 20a outputs the content data [E] combined with the content data [A] having been acquired.

The operating unit 52 of the communication terminal 5f1 receives operation by the user with the electronic pen P1 or the like (Step S50). The operating unit 52 transmits operation information [p] to the browser management unit 22 through the transmitter/receiver 51 and the transmitter/receiver 31 (Step S51). In this manner, the operation information [p] is input to browser 20a of the browser management unit 22 of the distribution management apparatus 2. In the browser 20a, the acquiring unit 201 acquires the operation information [p].

Next, the browser 20a performs drawing processing (Step S53).

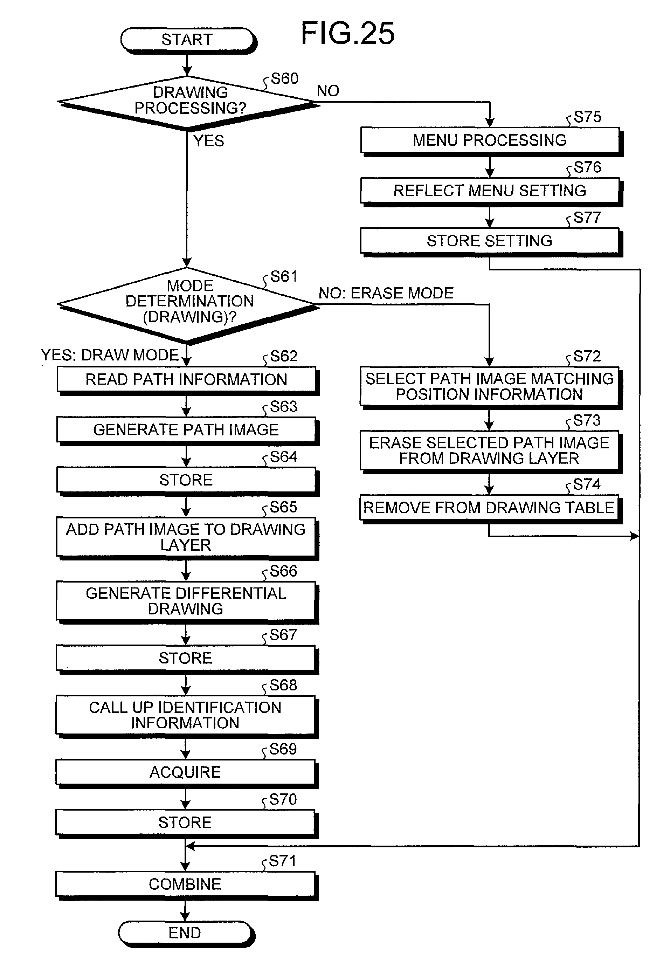

FIG. 25 is a flowchart illustrating the drawing processing. The browser 20a determines whether to perform the drawing processing (Step S60). The browser 20a makes determination whether the processing contents instructed by the instruction information included in the operation information [p] acquired at Step S51 (refer to FIG. 24) is a drawing processing instruction, as the determination at Step S60.

When performing the drawing processing (Yes at Step S60), the browser 20a performs mode determination (Step S61). The browser 20a makes determination whether the mode indicated by the instruction information included in the operation information [p] acquired at Step S51 (refer to FIG. 24) is a drawing mode, as the determination at Step S61.

If the mode is the drawing mode (Yes at Step S61), the browser 20a reads the path information included in the operation information [p] acquired at Step S51 (refer to FIG. 24) (Step S62). By the processing at Step S62, the browser 20a reads the path attribute information such as the line type of an operation path, the thickness of the path, and the color of the path and a set of position coordinates indicating the path. When the operation path indicates a "point", the set of position coordinates indicating paths may be one pair of position coordinates.

The browser 20a generates a path image (Step S63). Specifically, the browser 20a renders the set of position coordinates indicating the path indicated by the path information included in the operation information [p] and the path attribute information, thereby generating a path image p as a command indicating a drawing instruction of an image indicating the operation path. The browser 20a generates the coordinates of the drawing starting position of the operation path from the set of position coordinates indicating the path included in the operation information [p] as coordinates on a page. In this manner, the browser 20a generates the path information (refer to FIG. 9) including the path image p and the coordinates on the page.

The browser 20a stores the generated path information in the drawing table 23C (Step S64). In this situation, the browser 20a stores the terminal ID included in the operation information [p] received at Step S51 (refer to FIG. 24) and the home URL (setting information) of the communication terminal 5f1 identified by the terminal ID in association with the path information in the drawing table 23C.

The browser 20a adds the generated path image p to a drawing layer (Step S65).

In the present embodiment, video data generated by the browser 20 employs a layered structure. The present embodiment assumes a layered structure in which a background image layer, output image layer, a drawing layer, and a button layer are stacked in order. The order of stacking is not limited to this order. The background image layer is a layer that arranges thereon a background image such as grid lines. The output image layer is a layer that arranges thereon video data generated by the browser 20 from content data acquired from the web server 8 or other facilities. The drawing layer is a layer that arranges thereon the path image. The button layer is a layer that arranges thereon a button image for the user to input various kinds of instructions.

The browser 20a generates differential drawing (Step S66). At the processing at Step S65, when the path image is already drawn on the drawing layer, the browser 20a adds the generated path image p to the drawing layer. The browser 20a then stores the differential drawing generated at Step S66 in the storage unit 23 (Step S67).

The browser 20a calls up identification information for identifying video (sound) data being reproduced in another communication terminal (the communication terminal 5f3 in the present embodiment) as an object of the remote sharing processing at the drawing timing included in the operation information [p] acquired from the communication terminal 5f1 at Step S51 (refer to FIG. 24) (Step S68). This Step S68 corresponds to Step S52 in FIG. 24.

The browser 20a transmits an acquisition request for the identification information to the browser 20b. The acquisition request includes the drawing timing. Upon receiving the acquisition request, the browser 20b identifies content data corresponding to the video (sound) data being distributed to the communication terminal 5f3 from the transmission FIFO 24b at the drawing timing included in the acquisition request. The browser 20b transmits identification information for identifying the identified content data to the browser 20a (refer to Step S52 in FIG. 24).

As described above, this identification information includes the destination URL indicating the URL of the browser 20 to which the content data is distributed and the destination URL terminal ID.

By receiving the identification information from the browser 20b, the browser 20a acquires the identification information (Step S69). The browser 20a then stores the acquired identification information and the path information generated at Step S63 in association with each other in the drawing table 23C (Step S70).

By the processing at Step S70, for example, the terminal ID ("t006"), the setting information ("www.ricoh.co.jp"), the path information (the coordinates on the page "x1, y2" and the "wavy, blue, thick path image"), the identification information (the destination URL "http:www.skydrive.com", and the destination URL terminal ID "t007") in association with each other are stored in the drawing table 23C, as illustrated in FIG. 9.

Although a case in which the path information stored in the drawing table 23C includes the coordinates on the page and the path image is described in the present embodiment, all pieces of path information (the set of position coordinates indicating the path and the path attribute information) included in the operation information [p] received from the communication terminal 5 (the communication terminal 5f1 in the present embodiment) may be stored.

Returning back to FIG. 25, the browser 20a stacks the background image layer, the output image layer to which the content data ([A], [E]) having been acquired is added, the drawing layer to which the path image p is added, and the button layer separately prepared, thereby combining these video (sound) data and the path image p (Step S71). The present routine then ends.

At Step S61, if the mode indicated by the instruction information included in the operation information [p] acquired at Step S51 (refer to FIG. 24) is an erase mode, negative determination is performed (No at Step S61). The browser 20a selects a path image matching the position information on the screen of the operation path to be erased included in the operation information [p] from the drawing table 23C (Step S72).

The browser 20a erases the selected path image from the drawing layer (Step S73). The browser 20a deletes the row including the selected path image from the drawing table 23C (Step S74). In other words, the selected path image, the terminal ID, the setting information, the coordinates on the page, and the identification information corresponding to the path image are deleted from the drawing table 23C. The process proceeds to Step S71.

If the browser 20a determines not to perform the drawing processing at Step S60 (No at Step S60), the process proceeds to Step S75. The browser 20a performs negative determination at Step S60 when determining that the processing contents indicated by the instruction information included in the operation information [p] acquired at Step S51 (refer to FIG. 24) include a menu processing instruction.

The browser 20a performs processing instructed by menu processing included in the operation information [p] (Step S75). The menu processing instruction includes instructions such as a change of display contents, a change of a display color, a change of the path attribute information (display color, line type, thickness, and the like), enlargement, reduction, and capture.

The browser 20a reflects the setting change by the menu processing performed at Step S75 (Step S76). The browser 20a then stores the setting after being changed by the menu processing at Step S75 in the storage unit 23 (Step S77). The process proceeds to Step S71. By the processing from Step S75 to S77, when a change instruction for the display color of the path image is received as the menu processing, for example, the browser 20a changes the path attribute information 23B stored in the storage unit 23 to the contents depending on the change instruction.

It is assumed that the path attribute information included in the operation information [p] acquired by the browser 20a is "the same as previous". In this case, the browser 20a generates the path image from the path attribute information 23B stored in the storage unit 23 and the set of position coordinates indicating the path included in the operation information [p] at the processing at Step S63.

Returning back to FIG. 24, the browser 20a renders the content data [A], the content data [E], and the operation image p combined at Step S71 (refer to FIG. 25) and outputs video (sound) data ([A], [E], [p]) to the transmission FIFO 24a (Step S54).

The converter 10 encodes the video (sound) data ([A], [E], [p]) stored in the transmission FIFO 24a, thereby converting it into video (sound) data ([A], [E], [p]) to be distributed to the communication terminal 5f1 (Step S55). The encoder bridge unit 30 transmits the video (sound) data ([A], [E], [p]) to the reproduction controller 53 of the communication terminal 5f1 through the transmitter/receiver 31 and the transmitter/receiver 51 (Step S56). After that, the video (sound) data ([A], [E], [p]) is decoded by the decoding unit 50 of the communication terminal 5f1 to be output as sound to the speaker 61, or is rendered by the rendering unit 55 to be output as video to the display unit 58 (Step S57).

Once the processing from Step S46 to Step S57 described with reference to FIG. 24 and FIG. 25 is performed, the communication terminal 5f1 reproduces the video (sound) data ([A], [E], [p]) in which the path image p of the operation path is combined with video (sound) data depending on the content data [A], [E]. The identification information corresponding to the path information indicating the operation path drawn by the communication terminal 5f1 is successively stored in the drawing table 23C of the distribution management apparatus 2. This identification information is, as described above, information that identifies the content data corresponding to the video (sound) data being reproduced by the communication terminal 5f3 at the drawing timing of the operation path.

Thus, the distribution management apparatus 2 according to the present embodiment can dynamically associate the operation path drawn by one communication terminal with the information on the video being reproduced by another communication terminal.

Described next is a processing procedure when the communication terminal 5 acquires the identification information.

The communication terminal 5f1 transmits an acquisition request for the identification information to the distribution management apparatus 2. Upon receiving the acquisition request from the communication terminal 5f1, the distribution management apparatus 2 causes the browser 20a to read the path information corresponding to the terminal ID of the communication terminal 5f1 included in the acquisition request and the identification information from the drawing table 23C. The browser 20a adds the path image [p] included in the read path information to the drawing layer in the same manner as Step S65 (refer to FIG. 25). The browser 20a then combines and renders the content data (the content data [B], for example) identified by the identification information and the path image, thereby generating video (sound) data ([B], [p]), and outputs it to the transmission FIFO 24a in the same manner as Step S71.

The browser 20a encodes the video (sound) data ([B], [p]), thereby converting it into video (sound) data ([B], [p]) to be distributed to the communication terminal 5f1. The encoder bridge unit 30 transmits the video (sound) data ([B], [p]) to the reproduction controller 53 of the communication terminal 5f1 through the transmitter/receiver 31 and the transmitter/receiver 51. After that, the video (sound) data ([B], [p]) is decoded by the decoding unit 50 of the communication terminal 5f1 to be output as sound to the speaker 61, or is rendered by the rendering unit 55 to be output as video to the display unit 58.

The communication terminal 5f1 on which the operation path is drawn is provided with the path image of the drawn operation path and the video (sound) data being reproduced by the other communication terminal at the drawing timing in which the operation path is drawn in response to the request of the user who operates the communication terminal 5f1. This enables the user who operates the communication terminal 5f1 to easily check the details of the operation path and the video (sound) displayed on the other communication terminal 5 when the operation path is drawn.

Main Effect of the Embodiment

As described above, the distribution management apparatus 2 according to the present embodiment performs the processing from Step S46 to Step S57 described with reference to FIG. 24 and FIG. 25, thereby performing the following processing: associating the path information indicating the operation path drawn by the communication terminal 5f1 with the identification information that identifies the content data corresponding to the video (sound) data being reproduced by the communication terminal 5f3 at the drawing timing of the operation path; and storing them in the drawing table 23C, sequentially.

The present embodiment can thereby dynamically associate the operation path drawn by one communication terminal with the information on the video being reproduced by another communication terminal.

When the acquisition request for the identification information is received from the communication terminal 5f1, the video (sound) data in which the path image and the video (sound) data being reproduced by the communication terminal 5f3 at the drawing timing of the path image are combined is distributed to the communication terminal 5f1.

A case is assumed in which an electronic blackboard is used as the communication terminal 5f1 and a projector is used as the communication terminal 5f3, for example. In this case, the user draws an operation path with the electronic pen P while watching the video (sound) data reproduced by the communication terminal 5f3, thereby causing operation information to be input to the communication terminal 5f1. In this case, the path information indicating the operation path input by the communication terminal 5f1 that is the electronic blackboard and the identification information of the content data corresponding to the video (sound) data being reproduced by the communication terminal 5f3 that is the projector at the drawing timing of the operation path are dynamically associated with each other. In response to the acquisition request for the identification information by the operation instruction by the user, the path image of the operation path and the video (sound) data being reproduced by the other communication terminal 5 at the drawing timing of the operation path are distributed from the distribution management apparatus 2 to the communication terminal 5.

This enables the present embodiment, in addition to the above effect, to easily provide the video (sound) data being reproduced by the other communication terminal 5 at the drawing timing of the operation path to the user in a reusable manner and easily.

In the distribution system 1 according to the present embodiment, the distribution management apparatus 2 includes the browser 20 and the encoder bridge unit 30 that performs encoding and other operations on the cloud. With this configuration, the browser 20 generates video data or sound data from the content data expressed with a certain description language, and the encoder bridge unit 30 converts the format of the generated data so as to be distributed through the communication network 9 and distributes the converted data to the communication terminal 5. This reduces a load to receive the content expressed with the certain description language and a load to convert the received content into video data or sound data in the communication terminal 5. This can in particular resolve the problem in that the load of the communication terminal 5 when utilizing enriched content is high.

In particular, the browser 20 enables real-time communication, and the convertor 10 performs real-time encoding on the video (sound) data generated by the browser 20. Consequently, unlike a case in which a DVD player selects and distributes non real-time (that is, pre-encoded) video (sound) data as seen in, for example, on-demand distribution of video (sound) data, the distribution management apparatus 2 renders content acquired immediately before being distributed, thereby generating pieces of video (sound) data and then encoding it, thus allowing distribution of real-time video (sound) data.

Supplementary Description

Although the distribution management apparatus 2 according to the present embodiment assumes two communication terminals 5 including the communication terminal 5f1 as the electronic blackboard that inputs the operation path and the other communication terminal 5f3 as the projector or the like, the other communication terminal 5f3 may be a plurality of communication terminals.

In this case, the distribution management apparatus 2 may associate pieces of identification information for identifying respective pieces of content data corresponding to respective pieces of video (sound) data that were reproduced by the respective communication terminals 5f3 at the drawing timing in the communication terminal 5f1 and path information each other and store them in the drawing table 23C. When a browsing request for the identification information is received from the communication terminal 5f1, the browser 20a reads the path information corresponding to the terminal ID of the communication terminal 5f1 included in the browsing request and the pieces of identification information from the drawing table 23C. The browser 20a adds the path image [p] included in the read path information to the drawing layer in the same manner as Step S65 (refer to FIG. 25). The browser 20a may then combine a plurality of pieces of content data identified by the pieces of identification information and the path image and output it to the transmission FIFO 24a in the same manner as Step S71.

The browser 20a encodes the combined image of the pieces of video (sound) data corresponding to the pieces of content data and the path image stored in the transmission FIFO 24a, thereby converting it into video (sound) data to be distributed to the communication terminal 5f1. The encoder bridge unit 30 transmits the video (sound) data to the reproduction controller 53 of the communication terminal 5f1 through the transmitter/receiver 31 and the transmitter/receiver 51. After that, the video (sound) data is decoded by the decoding unit 50 of the communication terminal 5f1 to be output as sound to the speaker 61, or is rendered by the rendering unit 55 to be output as video to the display unit 58.

The distribution system 1 according to the present embodiment includes the terminal management apparatus 7 and the distribution management apparatus 2 as separate systems. For example, the terminal management apparatus 7 and the distribution management apparatus 2 may be constructed as an integral system by, for example, causing the distribution management apparatus 2 to have the functions of the terminal management apparatus 7.

The distribution management apparatus 2 and the terminal management apparatus 7 according to the above embodiment may be constructed by a single computer or may be constructed by a plurality of computers in which respective parts (functions, means, or storage units) are divided and assigned arbitrarily.

A storage medium such as a CD-ROM storing the programs of the above embodiment and an HDD storing these programs can be provided domestically or abroad.

The present invention can exert the effect of dynamically associating an operation path drawn by one communication terminal and information on video being reproduced by another communication terminal.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1.   A distribution management apparatus (2) comprising:

       a generating unit (20; 20a; 20b) configured to render content data to generate video data;
       a converter (10) configured to convert a data format of the video data into a data format allowing the video data to be distributed to communication terminals (5) including a first communication terminal and a second communication terminal;
       a transmitter/receiver (31) configured to distribute the converted video data to the communication terminals (5) ;
       a receiver (31) configured to receive path information indicating an operation path drawn by the first communication terminal and a drawing timing of the operation path from the first communication terminal;
       an acquiring unit (201) configured to acquire identification information that identifies content data corresponding to video data reproduced by the second communication terminal at the drawing timing; and
       a storage unit (23) configured to store therein the path information and the identification information in association with each other.

2.   The distribution management apparatus (2) according to claim 1, wherein the second communication terminal includes the communication terminals (5).

3.   The distribution management apparatus (2) according to claim 1 or 2, wherein the generating unit (20; 20a; 20b) is configured to, upon receiving an acquisition request for the identification information from the communication terminal (5), render content data identified by the identification information and generate video data.

4.   The distribution management apparatus (2) according to any one of claims 1 to 3, wherein
       the generating unit (20; 20a; 20b) is configured to combine and render the content data and the path information to generate video data,
       the converting unit (10) is configured to convert a data format of the video data into a data format allowing the video data to be distributed to the first communication terminal, and

the transmitter/receiver (31) is configured to distribute the converted video data to the first communication terminal.

5. The distribution management apparatus according to any one of claims 1 to 4, wherein the first communication terminal is an electronic blackboard capable of receiving an operation path drawn by a user and electronically converting the operation path.

6. A distribution management system (1) comprising a distribution management apparatus (2) and communication terminals (5) including a first communication terminal and a second communication terminal connected to the distribution management apparatus (2) through a network (9), wherein
the distribution management apparatus (2) includes
a generating unit (20; 20a; 20b) configured to render content data to generate video data;
a converter (10) configured to convert a data format of the video data into a data format allowing the video data to be distributed to the communication terminals (5) including the first communication terminal and the second communication terminal;
a transmitter/receiver (31) configured to distribute the converted video data to the communication terminals (5);
a receiver (31) configured to receive path information indicating an operation path drawn by the first communication terminal and a drawing timing of the operation path from the first communication terminal;
an acquiring unit (201) configured to acquire identification information that identifies content data corresponding to video data reproduced by the second communication terminal at the drawing timing; and
a storage unit (23) configured to store therein the path information and the identification information in association with each other.

# FIG.1

DISTRIBUTION
SYSTEM
1

WEB SERVER
8

TERMINAL
MANAGEMENT
APPARATUS
7

DISTRIBUTION
MANAGEMENT
APPARATUS
2

BROWSER ~20

A

COMMUNICATION NETWORK ~9

5a  5b  5c  5d  5e  5f

5
COMMUNICATION
TERMINAL

# FIG.2

# FIG.3

DISTRIBUTION
MANAGEMENT
APPARATUS

8

2

20

BROWSER

30

ENCODER BRIDGE UNIT

5

A

# FIG.4

8 —

DISTRIBUTION
MANAGEMENT
APPARATUS                    2

BROWSER    20

ENCODER BRIDGE UNIT    30

5f1        5f2        5f3

A          A          A

# FIG.5

# FIG.6

EP 2 849 455 A1

# FIG.7

EP 2 849 455 A1

FIG.8

EP 2 849 455 A1

# FIG.9

23C

| TERMINAL ID | SETTING INFORMATION (HOME URL) | PATH INFORMATION | | IDENTIFICATION INFORMATION | |
|---|---|---|---|---|---|
| | | COORDINATES ON PAGE | PATH IMAGE | DESTINATION URL | DESTINATION URL TERMINAL ID |
| t006 | www.ricoh.co.jp | (x1, y2) | ⌒⋁⋀⋀ | http://www.skydrive.com | t007 |
| t006 | www.ricoh.co.jp | (x2, y2) | ╲ | http://www.skydrive.com | t007 |
| t006 | www.ricoh.co.jp | (x3, y3) | ╱ | http://www.backlog.com | t007 |

# FIG.10

EP 2 849 455 A1

# FIG.11

BROWSER ~20
2

TRANSMITTER/
RECEIVER
71b

7

TERMINAL MANAGEMENT
APPARATUS

75
AUTHENTICATION
UNIT

7000
STORAGE UNIT

DISTRIBUTION DESTINATION
SELECTION MENU

7010
TERMINAL
MANAGEMENT
TABLE

7020
AVAILABLE
TERMINAL
MANAGEMENT
TABLE

5

71a
TRANSMITTER/
RECEIVER

33

# FIG.12

| DISTRIBUTION DESTINATION SELECTION MENU CHECK ANY CONTENT DISTRIBUTION DESTINATION AND PRESS "OK" | | |
|---|---|---|
| CHECK | SHARED ID | DISPLAY NAME |
|  | v003 | TOKYO HEAD OFFICE 10F MFP |
| ✓ | v006 | OSAKA EXHIBITION HALL 1F MULTI-PROJECTOR |
| ⋮ | ⋮ | ⋮ |

OK    CANCEL

# FIG.13

7010

| TERMINAL ID | USER CERTIFI-CATE | CONTRACT INFORMA-TION | TERMINAL TYPE | SETTING INFORMATION (HOME URL) | EXECUTION ENVIRONMENT INFORMATION (FAVORITES) (PREVIOUS COOKIE INFORMATION) (CACHE FILE) | SHARED ID | ARRANGE-MENT POSITION | DESTINATION URL | DISPLAY NAME |
|---|---|---|---|---|---|---|---|---|---|
| t001 | ••••• | FHD, 30FPS, 3-MONTH CONTRACT | NOTEBOOK PC | http://www.ricoh.co.jp | ••••• | v001 | - | | BEIJING OFFICE 1F RECEPTION TERMINAL |
| t002 | ••••• | HD, 30FPS, 3-MONTH CONTRACT | TABLET TERMINAL | http://www.ricoh.co.jp | ••••• | v002 | - | | NEW YORK OFFICE 1F LOBBY RECEPTION TERMINAL |
| t003 | ••••• | QVGA, 15FPS, 6 MONTHS | MFP | http://www.ricoh.co.jp | ••••• | v003 | - | | TOKYO HEAD OFFICE 10F MFP |
| t004 | ••••• | WXGA, 15FPS, 12 MONTHS | PROJECTOR | http://www.pontax.co.jp | ••••• | v004 | - | | TOKYO HEAD OFFICE 1F LOBBY PROJECTOR |
| t005 | ••••• | WXGA, 15FPS, 6 MONTHS | CAMERA/MICROPHONE/SPEAKER | - | - | v005 | - | | NAGOYA BRANCH OFFICE 2F TV CONFERENCE ROOM TERMINAL |
| t006 | ••••• | FHD, 30FPS, 12-MONTH CONTRACT | IWB | http://www.ricoh.co.jp | - | v006 | - | http://www.skydrive.com | OSAKA EXHIBITION HALL 1F MULTI-PROJECTOR |
| t007 | ••••• | FHD, 30FPS, 12-MONTH CONTRACT | IWB | http://www.skydrive.com | - | v006 | - | | OSAKA EXHIBITION HALL 1F MULTI-PROJECTOR |
| t008 | ••••• | FHD, 30FPS, 12-MONTH CONTRACT | DISPLAY | - | - | v007 | | | OSAKA EXHIBITION HALL 1F MULTI-PROJECTOR |
| ⋮ | ⋮ | ⋮ | ⋮ | ⋮ | ⋮ | ⋮ | ⋮ | ⋮ | ⋮ |

# FIG.14

7020

| TERMINAL ID | SHARED ID |
|-------------|-----------|
| t001 | v003 |
| t001 | v004 |
| t002 | v001 |
| ⋮ | ⋮ |
| t006 | v006 |
| t007 | v006 |
| ⋮ | ⋮ |

# FIG.15

30

ENCODER BRIDGE UNIT

310

GENERATING/SELECTING UNIT

10a

CONVERTER

10b

CONVERTER

320

SELECTING UNIT

# FIG.16

```
                              ┌─ 10
        ┌─────────────────────────────┐
        │ CONVERTER                    │
        │             ┌─ 11            │
        │   ┌───────────────────────┐  │
        │   │    TRIMMING UNIT      │  │
        │   └───────────────────────┘  │
        │             │ ┌─ 12          │
        │             ▼                │
        │   ┌───────────────────────┐  │
        │   │    RESIZING UNIT      │  │
        │   └───────────────────────┘  │
        │             │ ┌─ 13          │
        │             ▼                │
        │   ┌───────────────────────┐  │
        │   │    DIVIDING UNIT      │  │
        │   └───────────────────────┘  │
        │             │ ┌─ 19          │
        │             ▼                │
        │   ┌───────────────────────┐  │
        │   │    ENCODING UNIT      │  │
        │   └───────────────────────┘  │
        │             │                │
        └─────────────│───────────────┘
                      ▼
```

# FIG.17

# FIG.18

```
        ⌐5                                    ⌐2
┌─────────────────┐              ┌─────────────────┐
│  COMMUNICA-     │              │  DISTRIBUTION   │
│  TION           │              │  MANAGEMENT     │
│  TERMINAL       │              │  APPARATUS      │
└─────────────────┘              └─────────────────┘
        │  ⌐S81                            │
┌─────────────────────┐                    │
│ ACQUIRE TIME (tₛ) OF │                    │
│ COMMUNICATION       │                    │
│ TERMINAL            │                    │
└─────────────────────┘                    │
        │                                  │
        │  REQUEST FOR TIME INFORMATION (T) │
        │          (TIME (tₛ))              │
        │─────────────────────────────────▶│
        │              ⌐S82        ⌐S83     │
        │                   ┌───────────────────────┐
        │                   │ ACQUIRE TIME (Tᵣ) OF   │
        │                   │ DISTRIBUTION SYSTEM    │
        │                   └───────────────────────┘
        │                          ⌐S84     │
        │                   ┌───────────────────────┐
        │                   │ ACQUIRE TIME (Tₛ) OF   │
        │                   │ DISTRIBUTION SYSTEM    │
        │                   └───────────────────────┘
        │                                  │
        │     TIME INFORMATION (tₛ, Tᵣ, Tₛ) │
        │◀─────────────────────────────────│
        │  ⌐S86                     ⌐S85    │
┌─────────────────────┐                    │
│ ACQUIRE TIME (tᵣ) OF │                    │
│ TERMINAL            │                    │
└─────────────────────┘                    │
        │  ⌐S87                            │
┌─────────────────────┐                    │
│ CALCULATE TIME      │                    │
│ DIFFERENCE Δ        │                    │
│ BETWEEN SYSTEM AND  │                    │
│ TERMINAL            │                    │
└─────────────────────┘                    │
        │  ⌐S88                            │
┌─────────────────────┐                    │
│ STORE TIME          │                    │
│ DIFFERENCE Δ        │                    │
└─────────────────────┘                    │
        │                                  │
```

# FIG.19

COMMUNICA-TION TERMINAL $\overset{5}{\frown}$

DISTRIBUTION MANAGEMENT APPARATUS $\overset{2}{\frown}$

REPRODUCTION DELAY TIME INFORMATION (U)

S101

VIDEO (SOUND) DATA [A]+ SYSTEM TIME INFORMATION ($T_0$)

S102

S103

WAIT UNTIL TIME OF COMMUNICATION TERMINAL BECOMES $T_0+U-\Delta$ AND START REPRODUCTION

S104

READ TIME $t_0$ RECEIVED BY TERMINAL

S105

READ TIME DIFFERENCE $\Delta$

S106

CALCULATE TRANSMISSION DELAY TIME D1

CALCULATE TRANSMISSION DELAY TIME INFORMATION (D)

S107

S108

CALCULATE REPRODUCTION DELAY TIME (U') AND CALCULATE OPERATION CONDITIONS OF CONVERTER 10

REPRODUCTION DELAY TIME INFORMATION (U')

S109

S110

CHANGE OPERATION CONDITIONS OF CONVERTER

VIDEO (SOUND) DATA [A]+ SYSTEM TIME INFORMATION ($T_0$)

S111

S112

WAIT UNTIL TIME OF COMMUNICATION TERMINAL BECOMES $T_0+U'-\Delta$ AND START REPRODUCTION

# FIG.20

FOR UPSTREAM CASE, BECAUSE THE SYSTEM KNOWS THE TRANSMISSION DELAY TIME, THE TRANSMISSION DELAY TIME IS NOT REQUIRED TO BE GIVEN.

5

COMMUNICA-
TION
TERMINAL

2

DISTRIBUTION
MANAGEMENT
APPARATUS

VIDEO (SOUND) DATA [E], TIME INFORMATION ($t_0$), TIME DIFFERENCE INFORMATION ($\Delta$)

S121

S122

READ RECEIVED TIME $T_0$

S123

CALCULATE TRANSMISSION DELAY TIME d1

S124

OUTPUT TRANSMISSION DELAY TIME INFORMATION (d)

S125

CALCULATE OPERATION CONDITIONS OF ENCODING UNIT

CHANNEL ADAPTIVE CONTROL SIGNAL (OPERATION CONDITIONS)

S126

S127

CHANGE OPERATION CONDITIONS OF ENCODING UNIT

VIDEO (SOUND) DATA [E], TIME INFORMATION ($t_0$), TIME DIFFERENCE INFORMATION ($\Delta$)

S128

# FIG.21

| COMMUNICA-TION TERMINAL | DISTRIBUTION MANAGEMENT APPARATUS | TERMINAL MANAGEMENT APPARATUS |
|---|---|---|
| 5a | 2 | 7 |

S201
BROWSER GENERATES VIDEO (SOUND) [XYZ]

S202
CONVERTER PERFORMS ENCODING AND OTHER OPERATIONS

VIDEO (SOUND) DATA [XYZ]
S203

S204
REPRODUCE VIDEO (SOUND)

S205
RECEIVE PRESSING OF "DISTRIBUTION DESTINATION SELECTION MENU" BUTTON

REQUEST FOR SWITCHING TO DISTRIBUTION DESTINATION SELECTION MENU (TERMINAL ID)
S206

BROWSER STARTUP REQUEST
S207

S208
START UP BROWSER

S209
SWITCH OUTPUT FROM BROWSER TO CONVERTER

READ SELECTION MENU CONTENTS (CHECK BOX, SHARED ID, DISPLAY NAME) OF DISPLAY NAME OF AVAILABLE TERMINAL

REQUEST FOR DISTRIBUTION DESTINATION SELECTION MENU
S210

S211
EXTRACT SHARED ID

S212
EXTRACT DISPLAY NAME

DISTRIBUTION DESTINATION SELECTION MENU
S213

# FIG.22

| COMMUNICA-<br>TION<br>TERMINAL ⌇5a | DISTRIBUTION<br>MANAGEMENT<br>APPARATUS ⌇2 | TERMINAL<br>MANAGEMENT<br>APPARATUS ⌇7 |

S221
BROWSER GENERATES
VIDEO (SOUND) [M]

S222
CONVERTER PERFORMS
ENCODING OTHER
OPERATIONS

VIDEO (SOUND) DATA [M]
S223

S224
REPRODUCE VIDEO
(SOUND)

S225
RECEIVE SELECTION
(OK)

OPERATION DATA
(CHECK RESULT)
S226

S227
BROWSER SELECTS
SHARED ID FROM CHECK
RESULT

REQUEST FOR ADDING
DISTRIBUTION DESTINATION
(SHARED ID)
S228

S229
END BROWSER

S230
SWITCH OUTPUT FROM
BROWSER TO
CONVERTER

# FIG.23

```
         5
    ┌─────┴─────┐
    ┌5f3
┌──────────┐
│ COMMUNICA-│
│   TION    │
│ TERMINAL  │
└──────────┘
        ┌5f2
    ┌──────────┐
    │COMMUNICA-│
    │   TION   │
    │ TERMINAL │
    └──────────┘
            ┌5f1
        ┌──────────┐
        │COMMUNICA-│
        │   TION   │
        │ TERMINAL │
        └──────────┘
```

|  |  |  | ┌2 | ┌7 |
|---|---|---|---|---|
|  |  |  | DISTRIBUTION MANAGEMENT APPARATUS | TERMINAL MANAGEMENT APPARATUS |

┌S241
EXTRACT TERMINAL ID AND ARRANGEMENT POSITION INFORMATION CORRESPONDING TO SELECTED SHARED ID

INSTRUCTION TO ADD DISTRIBUTION DESTINATION (TERMINAL ID, ARRANGEMENT POSITION)

S242

┌S243
GENERATE CONVERTER FOR MULTIDISPLAY

┌S244
CONVERTER FOR MULTIDISPLAY PERFORMS DIVISION AND ENCODING ON VIDEO (SOUND) [XYZ]

VIDEO (SOUND) DATA [X]

┌S246-1    S245-1
REPRODUCE VIDEO (SOUND) [X]

VIDEO (SOUND) DATA [Y]

┌S246-2    S245-2
REPRODUCE VIDEO (SOUND) [Y]

VIDEO (SOUND) DATA [Z]

┌S246-3    S245-3
REPRODUCE VIDEO (SOUND) [Z]

# FIG.24

# FIG.25

START

S60 DRAWING PROCESSING? — NO

YES

S75 MENU PROCESSING

S76 REFLECT MENU SETTING

S77 STORE SETTING

S61 MODE DETERMINATION (DRAWING)? — NO: ERASE MODE

YES: DRAW MODE

S62 READ PATH INFORMATION

S63 GENERATE PATH IMAGE

S64 STORE

S65 ADD PATH IMAGE TO DRAWING LAYER

S66 GENERATE DIFFERENTIAL DRAWING

S67 STORE

S68 CALL UP IDENTIFICATION INFORMATION

S69 ACQUIRE

S70 STORE

S72 SELECT PATH IMAGE MATCHING POSITION INFORMATION

S73 ERASE SELECTED PATH IMAGE FROM DRAWING LAYER

S74 REMOVE FROM DRAWING TABLE

S71 COMBINE

END

Europäisches
Patentamt
European
Patent Office
Office européen
des brevets

# EUROPEAN SEARCH REPORT

Application Number

EP 14 18 3078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/107238 A1 (LIU DONG [US] ET AL) 5 May 2011 (2011-05-05) * paragraph [0018] - paragraph [0063]; figures 1-3 * ----- | 1-6 | INV. H04N21/475 H04N21/4788 H04N21/6587 |
| A | US 2011/047485 A1 (TAKAKURA MASAKI [JP]) 24 February 2011 (2011-02-24) * abstract * ----- | 1-6 | |
| A | US 2011/126127 A1 (MARIOTTI MARK [US] ET AL) 26 May 2011 (2011-05-26) * abstract * ----- | 1-6 | |

TECHNICAL FIELDS
SEARCHED        (IPC)

H04N

The present search report has been drawn up for all claims

| Place of search | Date of completion of the search | Examiner |
|---|---|---|
| The Hague | 21 January 2015 | Santos Conde, José |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                      EP 14 18 3078

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2015

| Patent document cited in search report | | Publication date | Patent family member(s) | | Publication date |
|---|---|---|---|---|---|
| US 2011107238 | A1 | 05-05-2011 | TW | 201141227 A | 16-11-2011 |
| | | | US | 2011107238 A1 | 05-05-2011 |
| | | | WO | 2011059700 A1 | 19-05-2011 |
| US 2011047485 | A1 | 24-02-2011 | CN | 101998106 A | 30-03-2011 |
| | | | JP | 2011044877 A | 03-03-2011 |
| | | | US | 2011047485 A1 | 24-02-2011 |
| US 2011126127 | A1 | 26-05-2011 | NONE | | |

EPO FORM P0459

For more details about this annex : see Official Journal of the European Patent Office, No. 12/82

**EP 2 849 455 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009065551 A